(19)

Europäisches
Patentamt
European
Patent Office
Office européen
des brevets

(11) **EP 2 557 709 A2**

(12) **EUROPEAN PATENT APPLICATION**
published in accordance with Art. 153(4) EPC

(43) Date of publication:
**13.02.2013 Bulletin 2013/07**

(21) Application number: **11766104.1**

(22) Date of filing: **04.04.2011**

(51) Int Cl.:
*H04J 11/00* (2006.01)    *H04B 7/04* (2006.01)

(86) International application number:
**PCT/KR2011/002337**

(87) International publication number:
**WO 2011/126253 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2010  KR 20100031375**
**05.04.2010  KR 20100031149**

(71) Applicant: **Pantech Co., Ltd.**
**Seoul, 121-270 (KR)**

(72) Inventors:
• **YOON, Sungjun**
**Seoul 121-270 (KR)**
• **PARK, Kyoungmin**
**Seoul 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **METHOD AND APPARATUS FOR TRANSCEIVING A CYCLIC SHIFT PARAMETER WHICH INDICATES ORTHOGONALITY**

(57)    The present description relates to a method and apparatus for transceiving a cyclic shift parameter which provides orthogonality. According to one embodiment of the present invention, a method, in which a base station transmits a cyclic shift parameter that provides orthogo- nality, involves determining multiple access states of one or more UEs, determining the cyclic shift parameter for calculating information related to the orthogonality, and transmitting the determined cyclic shift parameter to the UE.

FIG.5

EP 2 557 709 A2

## Description

Technical Field

The present specification relates to a wireless communication system, and more particularly to, a method and an apparatus for transceiving a cyclic shift parameter capable of indicating orthogonality.

Background Art

With the development of a communication system, consumers including companies and individuals use greatly various wireless terminals.

In a current mobile communication system, such as a 3GPP-based Long Term Evolution (LTE) and LTE-Advanced (LTE-A), as a high-speed and large capacity communication system capable transceiving various data, such as images and wireless data, beyond voice-centered services, the development of a technology for transmitting mass data equivalent to that of a wired communication network has been demanded, and an appropriate error detection method capable of improving performance of a system by minimizing information loss and improving transmission efficiency of the system becomes an essential factor.

Further, reference signals called reference signals or standard signals have been currently used in various communication systems in order to provide a counterpart device with information on a communication environment and the like through an uplink or a downlink. Hereinafter, a reference signal or a standard signal may be used together.

For example, in an LTE system that is one of mobile communication methods, a User Equipment (UE) transmits an Uplink Demodulation Reference Signal (UL DM-RS) for each slot as a reference signal in order to recognize channel information for demodulation of a data channel in Uplink (UL) transmission. Further, the UE transmits a sounding reference signal to a base station apparatus as a channel estimation reference signal indicating a channel state of the UE, and transmits a Cell-specific Reference Signal (CRS) for each subframe as a reference signal in order to recognize channel information in downlink transmission.

In the meantime, it is general that a transmission apparatus of a reference signal, i.e. a UE in a case of an uplink reference signal, and a base station apparatus in a case of a downlink reference signal, periodically generate reference signals and transmit the generated reference signals to a reference signal reception apparatus.

Further, the reference signal has been generated until now by a method of generating a plurality of sequences by complexly changing a phase by using a constant cyclic shift in a case of an uplink.

However, there is a demand for more expansively using a reference signal or sequences constituting a reference signal by reason of flexibility and the like of a communication system recently.

Disclosure

Technical Problem

An exemplary embodiment of the present invention provides a technology for transceiving a cyclic shift parameter capable of indicating orthogonality.

Another exemplary embodiment of the present invention provides a technology for transceiving a cyclic shift parameter so as to generate a reference signal without separate transmission of information related to orthogonality.

Technical solution

In order to solve the aforementioned problem, an exemplary embodiment of the present specification provides a method of transmitting a cyclic shift parameter indicating orthogonality by a base station, the method including: determining a multiple access state of one or more user equipments and determining a cyclic shift parameter so that the user equipment calculates information related to orthogonality; and transmitting the determined cyclic shift parameter to the user equipment, wherein the cyclic shift parameter is determined so that information related to orthogonality for each of all layers is calculated based on transmitted one cyclic shift parameter.

Another exemplary embodiment of the present specification provides a method of transmitting a reference signal by receiving a cyclic shift parameter indicating orthogonality by a user equipment, the method including: calculating information related to orthogonality for a first layer from a cyclic shift parameter received from a base station by the user equipment using two or more layers; calculating information related to orthogonality for each of remaining layers by using the information related to the orthogonality for the first layer; generating a reference signal for each of the layers by using the information on the orthogonality for each layer; and transmitting the generated reference signal to the base station.

Yet another exemplary embodiment of the present specification provides an apparatus for transmitting a cyclic shift parameter indicating orthogonality, the apparatus including: a UE configuration state determiner for determining a multiple access state of one or more user equipments; a cyclic shift parameter determiner for determining a cyclic shift parameter according to the determined multiple access state of the user equipment so as to calculate information related to orthogonality; a signal generator for generating a signal for transmitting control information including the determined cyclic shift parameter to the user equipment; and a transceiver for transmitting the signal to the user equipment, wherein the cyclic shift parameter is determined so that information related to orthogonality for each of all layers is calculated based on transmitted one cyclic shift parameter.

Still yet another exemplary embodiment of the present specification provides a user equipment for transmitting a reference signal by receiving a cyclic shift parameter indicating orthogonality, the user equipment including: a receiver for receiving control information from a base station by a user equipment using two or more layers; a cyclic shift parameter extractor for extracting a cyclic shift parameter from a control signal received by the receiver; an orthogonality related information calculator for calculating information related to orthogonality for a first layer based on the received cyclic shift parameter; a layer-based information calculator for calculating information related to orthogonality for each of remaining layers by using the information related to the orthogonality for the first layer; a reference signal generator for generating a reference signal for each of the remaining layers by using the information on the orthogonality for each of the layers; and a transmitter for transmitting the generated reference signal to the base station.

Brief Description of the Drawings

FIG. 1 is a wireless communication system to which exemplary embodiments of the present invention are applied.
FIG. 2 illustrates a subframe and a time slot structure of transmission data applicable to an exemplary embodiment of the present invention.
FIG. 3 is a diagram illustrating a process of generating a DM-RS sequence by a UE in an LTE environment.
FIG. 4 is a diagram illustrating a process of generating, by the UE, a DM-RS sequence and transmitting a DM-RS symbol by using an OCC value transmitted to the UE from a base station through 1 bit signaling of the present specification.
FIG. 5 is a diagram illustrating a process of setting and transmitting control information by a base station so that a UE may infer an OCC according to an exemplary embodiment of the present specification.
FIG. 6 is a diagram illustrating a process of inferring and setting an OCC based on control information transmitted by a base station, by a UE, according to an exemplary embodiment of the present specification.
FIG. 7 is a diagram illustrating a process of calculating and setting an OCC based on control information transmitted by a base station in an SU-MIMO by a UE according to an exemplary embodiment of the present specification.
FIG. 8 is a diagram illustrating a process of calculating and setting an OCC based on control information transmitted by a base station in an MU-MIMO by a UE according to an exemplary embodiment of the present specification.
FIG. 9 is a diagram illustrating a configuration of an apparatus for transmitting a cyclic shift parameter capable of indicating orthogonality according to an exemplary embodiment of the present specification.
FIG. 10 is a diagram illustrating a configuration of an apparatus for transmitting a reference signal satisfying orthogonality by receiving a cyclic shift parameter capable of indicating orthogonality according to an exemplary embodiment of the present specification.

Mode for carrying out the invention

Hereinafter, exemplary embodiments of the present invention will be described with reference to the accompanying drawings. In the following description, the same elements will be designated by the same reference numerals although they are shown in different drawings. Further, in the following description, a detailed explanation of known related functions and constitutions may be omitted so as to avoid unnecessarily obscuring the subject matter of the present invention.

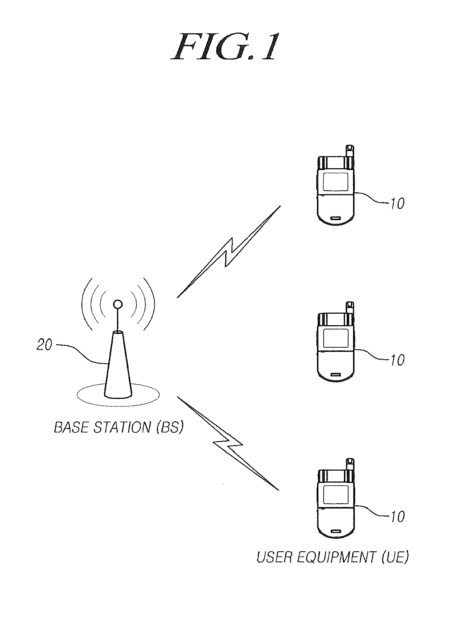

FIG. 1 is a wireless communication system to which exemplary embodiments of the present invention are applied.

A wireless communication system is widely arranged in order to provide various communication services, such as voice and packet data.

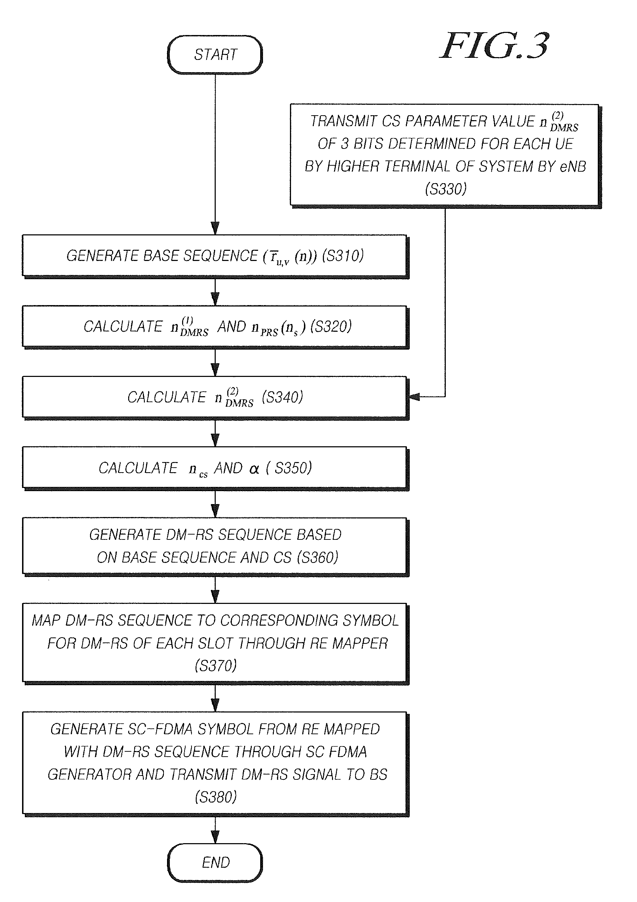

Referring to FIG. 1, a wireless communication terminal includes UEs 10 and a Base Station (BS) 20. The UE 10 and the BS 20 employ a reference signal generation technology for expanded channel estimation like an exemplary embodiment to be described below, which will be described in detail with reference to FIG. 3 and subsequent drawings thereof.

The UE 10 in the present specification is an inclusive concept meaning a user equipment in a wireless communication, and will be construed to include not only a UE in WCDMA, HSDPA, HSUPA, HSPA, LTE (Long Term Evolution), and LTE-A (LTE-Advanced), but also an MS (Mobile Station), a UT (User Terminal), an SS (Subscriber Station), and a wireless device in a GSM.

In the present specification, the UE 10 and the BS 20 are not limited to specifically expressed terms or words and inclusively indicate two transmitting and receiving agents used for implementation of the technology or technical idea described herein.

There is no limitation in a multiple access technique applied to a wireless communication system. Various multiple access techniques, such as CDMA (Code Division Multiple Access), TDMA (Time Division Multiple Access), FDMA (Frequency Division Multiple Access), OFDMA (Orthogonal Frequency Division Multiple Access), OFDM-FDMA, OFDM-TDMA, and OFDM-CDMA, may be used.

Uplink transmission and downlink transmission may employ a TDD (Time Division Duplex) method of performing transmission by using different times and a FDD (Frequency Division Duplex) method of performing transmission by using different frequencies.

An exemplary embodiment of the present invention may be applied to resource allocation in a field of asynchronous wireless communication evolved to LTE and LTE-advanced after GSM, WCDMA, and HSPA, synchronous wireless communication evolved to CDMA, CDMA-2000, and UMB, and the like. It shall not be construed that the present invention is limited to a specific wireless communication field, and shall be construed that the present invention includes all technical fields to which the spirit of the present invention is applicable.

A wireless communication system to which an exemplary embodiment of the present invention is applied may support uplink and/or downlink HARQ, and use a CQI (Channel Quality Indicator) for link adaptation. Further, the multiple access methods for downlink transmission and uplink transmission may be different, and for example, the downlink may use OFDMA (Orthogonal Frequency Division Multiple Access) and the uplink may use SC-FDMA (Single Carrier-Frequency Division Multiple Access).

Radio interface protocol layers between a UE and a network may be divided into a first layer L1, a second layer L2, and a third layer L3 based on subordinate three layers of an Open System Interconnection (OSI) widely known in a communication system, and a physical layer included in the first layer provides information transfer service using a physical channel.

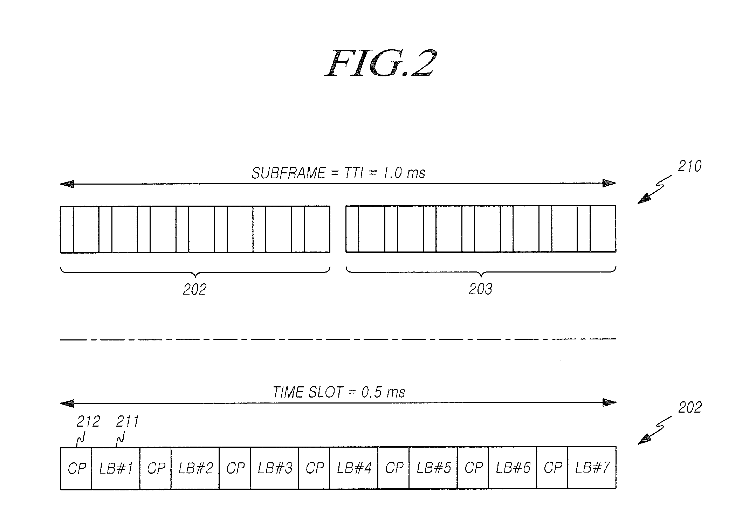

FIG. 2 illustrates a subframe and a time slot structure of transmission data applicable to an exemplary embodiment of the present invention.

Referring to FIG. 2, one radio frame or wireless frame may consist of 10 subframes 210, and one subframe may include two slots 202 and 203. A basic unit of data transmission is a subframe unit, and downlink or uplink scheduling is performed based on the subframe unit. One slot may include a plurality of OFDM symbols in a time domain and at least one subcarrier in a frequency domain, and include seven or six OFDM symbols.

For example, when a subframe consists of two time slots, each time slot may include seven or six OFDM symbols in a time domain and a frequency band of 180 Khz corresponding to 12 subcarriers in a frequency domain, and a time-frequency domain defined as described above may be called a Resource Block (RB), but is not limited thereto.

In the 3GPP LTE system, a frame transmission time is divided into TTIs (transmission time interval) of a duration time of 1.0 ms. Terms of the "TTI" and the "subframe" may have the same meaning, and the frame includes 10 TTIs having a length of 10 ms.

Reference numeral 202 represents a general structure of a time slot according to an exemplary embodiment of the present invention. As described above, the TTI is a basic transmission unit, and one TTI includes two time slots 202 and 203 having the same length within one subframe 210, and each time slot has a duration time of 0.5 ms. The time slot includes seven or six Long Blocks (LB) 211 for a symbol. The LB is divided by a Cyclic Prefix (CP) 212. Taken together, one TTI or subframe may include 14 or 12 LB symbols depending on a length of the CP, but the present specification is not limited to the aforementioned frame, subframe, or timeslot structure.

In the meantime, in the LTE communication system that is one of the current wireless communication methods, a Demodulation Reference Signal (DMRS, DM-RS) and a Sounding Reference Signal (SRS) are defined in a case of an uplink, and a Cell-specific Reference Signal (CRS), a Multicast/Broadcast over Single Frequency Network Reference Signal (MBSFN-RS), and a UE-specific reference signal are defined in a case of a downlink.

That is, in order to recognize channel information for demodulation of a data channel in the uplink transmission, the UE in the wireless communication system transmits an UpLink Demodulation Signal (UL DMRS or UL DM-RS) for each slot. In a case of the UL DM-RS linked to a Physical Uplink Shared CHannel (PUSCH), a reference signal is transmitted for one symbol for each slot, and in a case of the UL DMRS linked to a Physical Uplink Control CHannel (PUCCH), a reference signal is transmitted for a maximum of three symbols for each slot. In this case, a mapped DM-RS sequence consists of a Cyclic Shift (CS) and a base sequence ($\bar{r}_{u,v}(n)$), and the LTE system may configure the DM-RS sequence for one layer.

FIG. 3 is a diagram illustrating a process of generating the DM-RS sequence by the UE in an LTE environment.

[Equation 1]

$$r_{u,v}^{(\alpha)}(n) = e^{j\alpha n}\overline{r}_{u,v}(n), \begin{cases} 0 \le n < M_{sc}^{RS} \\ M_{sc}^{RS} = mN_{sc}^{RB} \\ 1 \le m \le N_{RB}^{max,UL} \\ M_{sc}^{RS} : \text{the number of subcarriers allocated for UL DM-RS sequence in a frequency axis} \end{cases}$$

Reference Signal (RS) sequence

Base sequence

Cyclic Shift (CS)

Equation 1 represents an example in which a reference signal (RS) sequence is calculated based on $\alpha$ that is a cyclic shift (CS) and a base sequence $(\overline{r}_{u,v}(n))$. For a UL DM-RS sequence, a base sequence based on a Zadoff-Chu sequence is generated (S310). The base sequence is differently generated depending on a group number u, a base sequence number v within a group, and a length n of the sequence. However, the base sequences of the UL DM-RS occupying the same frequency bandwidth of the same BS (cell and the like) and slot time are the same.

In the meantime, a process of calculating a value of $\alpha$ of the cyclic shift (CS) is expressed by Equation 2.

[Equation 2]

$$\alpha = 2\pi n_{cs}/12$$

$$n_{cs} = \left(n_{DMRS}^{(1)} + n_{DMRS}^{(2)} + n_{PRS}(n_s)\right) \bmod 12$$

$$n_{PRS}(n_s) = \sum_{i=0}^{7} c(8N_{symb}^{UL} \cdot n_s + i) \cdot 2^i$$

In order to calculate $n_{cs}$ for calculating a value of $\alpha$, $n_{DMRS}^{(1)}$, $n_{DMRS}^{(2)}$, and $n_{PRS}(n_s)$ needs to be calculated. $n_{DMRS}^{(1)}$ is determined based on a value of a cyclic shift parameter given by a higher layer as represented in Table 1. Accordingly, $n_{DMRS}^{(1)}$ is calculated as represented in Table 1 (S320).

[Table 1]

| $n_{DMRS}^{(1)}$ | |
| --- | --- |
| cyclicshift | $n_{DMRS}^{(1)}$ |
| 0 | 0 |
| 1 | 2 |
| 2 | 3 |
| 3 | 4 |

(continued)

| $n_{DMRS}^{(1)}$ | |
|---|---|
| cyclicshift | $n_{DMRS}^{(1)}$ |
| 4 | 6 |
| 5 | 8 |
| 6 | 9 |
| 7 | 10 |

$n_{PRS}(n_s)$ is calculated as represented in Equation 2 (S320), and c(i) that is a Pseudo Random (or Noise) sequence (PN sequence) may be a cell-specific value.

$n_{DMRS}^{(2)}$ is calculated based on a cyclic shift parameter in a CS (cyclic shift) field of the most recent DCI format 0 as represented in Table 2, and is determined by a higher layer. In S330, the UE receives the cyclic shift parameter of 3 bits scheduled and determined by a higher terminal from the BS and the like, and the signaled parameter of 3 bits may be loaded into a CS (cyclic shift) field of the DCI format 0 like the exemplary embodiment represented in Table 2 and transmitted. $n_{DMRS}^{(2)}$ is calculated based on the signaled parameter of 3 bits transmitted while being loaded into the cyclic shift field and transmitted, by a mapping rule represented in Table 2 (S330 and S340).

[Table 2]

| $n_{DMRS}^{(2)}$ | |
|---|---|
| Cyclicshift in DCI format 0 | $n_{DMRS}^{(2)}$ |
| 000 | 0 |
| 001 | 6 |
| 010 | 3 |
| 011 | 4 |
| 100 | 2 |
| 101 | 8 |
| 110 | 10 |
| 111 | 9 |

Hereinafter, $n_{cs}$ and $\alpha$ are calculated based on the values calculated in steps S320 to S340 (S350). $n_{DMRS}^{(1)}$ and $n_{PRS}(n_s)$ which are parameters in $n_{cs}$ for calculating the value of $\alpha$ are varied depending on each BS (cell and the like) and a slot time, but have fixed values in the same BS (cell and the like) and the same slot time, so that a parameter actually varying the value of $n_{cs}$ is $n_{DMRS}^{(2)}$. That is, the parameter actually transmitted through the BS by scheduling by a higher terminal for each UE is $n_{DMRS}^{(2)}$, and the value of $\alpha$ that is a CS (cyclic shift) value of the UL DM-RS is varied according to the value of $n_{DMRS}^{(2)}$.

Then, the DM-RS sequence is generated by Equation 1 based on the base sequence of S310 and $\alpha$ (value of cyclic shift (CS)) of S350 (S360).

The DM-RS sequence generated by Equations 1 and 2 is mapped to a corresponding symbol of each slot, and the mapping is performed through a resource element mapper (S370). In the case of the DM-RS linked to the PUSCH, the symbol corresponds to the fourth symbol among seven symbols of each slot in a case of using a normal CP (cyclic prefix), and the third symbol among the symbols of each slot in a case of using an extended CP. In the case of the DM-RS linked to the PUCCH, the corresponding symbol may include a maximum of three symbols in each slot, and the number and a position of the corresponding symbols are different according to the type of CPs and the format of the PUCCH as represented in Table 3.

[Table 3] Symbol position within slot according to the type of CPs and a format of PUCCH

| Format of PUCCH | Symbol position within slot | |
|---|---|---|
| | Normal CP | Extended CP |
| 1, 1a, 1b | 2, 3, 4 | 2, 3 |
| 2 | 1, 5 | 3 |
| 2a, 2b | 1, 5 | N/A |

When the mapping is completed, an SC-FDMA symbol is generated from a Resource Element (RE) mapped with the DM-RS sequence through an SC FDMA generator and a DM-RS signal is transmitted to the BS (S380).

In the meantime, a next-generation communication technology, such as the LTE-A system, supports a maximum of 4 antennas in a case of the uplink, and thus the DM-RS sequence mapping differentiated for a maximum of four layers is necessary. To this end, by varying the CS values in the base sequence, orthogonality may be maintained.

Further, in order to further secure orthogonality between layers in the SU-MIMO (Single-User Multiple Input Multiple Output) and the MU-MIMO (Multiple-User Multiple Input Multiple Output), or discriminate the plurality of UEs in the MU-MIMO, a method of adding an OCC (Orthogonal Cover Code) in the unit of the slot has been suggested.

An OCC may be configured as represented in Table 4.

[Table 4] Configuration of OCC

| $n_{occ}$ | OCC |
|---|---|
| 0 | {+1, +1} |
| 1 | {+1, -1} |

In the meantime, when only one layer is used like in the conventional LTE, the CS value determined by scheduling by the higher terminal is signaled to the UE by the parameter expressed by 3 bits as represented in Table 2 through the BS (eNB, and the like), but it is necessary to provide the CS value and the OCC such that many layers and the UE may have orthogonality from each other in the system, such as the LTE-A. For example, in a case of using a maximum of four layers, it is necessary to secure orthogonality by applying the CSs and OCCs for the maximum of four layers.

Accordingly, the BS transfers information on $n_{occ}$ of 1 bit indicating the OCC to the UE, so that orthogonality between the UEs or the layers may be secured in the mapping of the DM-RS sequence by using the value. In the meantime, in a method of transferring the $n_{occ}$ to the UE, first, the BS may directly transmit the value of the $n_{occ}$ to the UE through the 1-bit signaling.

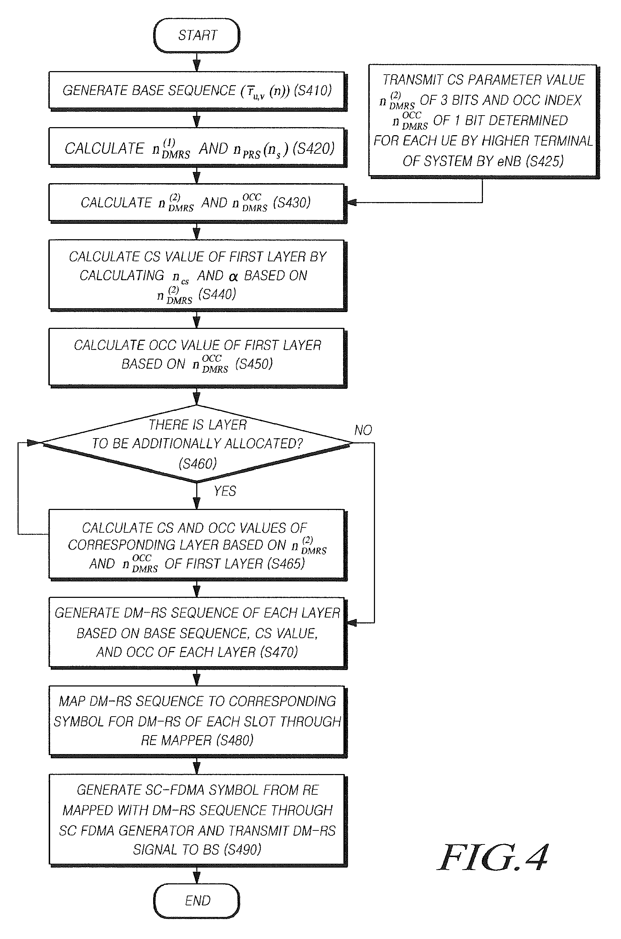

FIG. 4 is a diagram illustrating a process of generating, by the UE, the DM-RS sequence and transmitting a DM-RS symbol by using the value of the OCC transmitted to the UE from the BS through the 1 bit signaling of the present specification.

FIG. 4 illustrates a process in which the BS explicitly transmits the value of the OCC through the 1-bit signaling by the BS, and the UE generates the DM-RS sequence by using the value of the OCC by the UE. As described above, the value determined for each UE after being scheduled by the higher layer of the system corresponds to a cyclic shift parameter expressed by 3 bits transmitted through the DCI format 0, and $n_{\mathrm{DMRS}}^{(2)}$ is indicated in the cyclic shift parameter by aforementioned Table 2. In FIG. 4, the BS additionally transmits the $n_{\mathrm{occ}}$ of 1 bit. Accordingly, in order to generate the DM-RS sequence, a total of information of 4 bits ( $n_{\mathrm{DMRS}}^{(2)}$ of 3 bits and the nOCC of 1 bit) is transmitted from the BS to the UE.

A base sequence based on the Zadoff-Chu sequence is generated for a UL DM-RS sequence (S410). Then, $n_{\mathrm{DMRS}}^{(1)}$ is calculated based on the cyclic shift parameter given by the higher layer as represented in Table 1, and $n_{\mathrm{PRS}}(n_{\mathrm{s}})$ is calculated as expressed in Equation 2 (S420). Next, the BS (eNB and the like) inserts a CS parameter expressed by 3 bits indicating $n_{\mathrm{DMRS}}^{(2)}$ determined for each UE by the higher terminal of the system and a parameter expressed by 1 bit indicating an OCC index value $n_{\mathrm{DMRS}}^{OCC}$ in a control signal, such as the DCI format 0, and transmits the control signal for each UE (S425).

The UE calculates $n_{\mathrm{DMRS}}^{(2)}$ that is the value of the CS parameter based on the received control signal, and also calculates $n_{\mathrm{DMRS}}^{OCC}$ that is the OCC index value (S430).

Then, a CS value and an OCC value of the first layer are calculated, in which $n_{\mathrm{cs}}$ and $\alpha$ are calculated based on $n_{\mathrm{DMRS}}^{(2)}$ in Equation 2, and the CS value of the first layer may be calculated by Equation 1 (S440). Then, the value of the OCC of the first layer may be calculated based on $n_{\mathrm{DMRS}}^{OCC}$ with reference to Table 4 (S450).

When the values of the CS and the OCC for the first layer are set, it is identified if there is a layer to be additionally allocated (S460). When there is the layer to be additionally allocated, values of an CS and an OCC of the corresponding layer may be calculated based on $n_{\mathrm{DMRS}}^{(2)}$ and $n_{\mathrm{DMRS}}^{OCC}$ of the first layer according to a predetermined rule (S465). Then, it returns to step S460 to identify if there is a layer to be additionally allocated. When there is no layer to be added, it proceeds to step S470. A DM-RS sequence of each layer is generated by applying the OCC to Equation 1 based on the calculated base sequence, CS, and OCC of each layer (when the OCC is {+1, +1} like an example of Table 4, a DM-RS sequence of the first symbol (or the first slot of one subframe when the number of symbols is one for each slot) directly employs a value of Equation 1, and a DM-RS sequence of the second symbol (or the second slot of one subframe when the number of symbols is one for each slot) also directly employs the value of Equation 1. When the OCC is {+1, -1}, a DM-RS sequence of the first symbol (or the first slot of one subframe when the number of symbols is one for each slot) directly employs the value of Equation 1, but the DM-RS sequence of the second symbol (or the second slot of one subframe when the number of symbols is one for each slot.) employs a value obtained by multiplying the value of Equation 1 by -1 (S470). Then, the generated DM-RS sequence is mapped to a corresponding symbol of each slot through the resource element mapper (S480). The symbol mapped with the DM-RS linked to the PUSCH corresponds, as described above, to the fourth symbol among the seven symbols of each slot in a case of using the normal CP (cyclic prefix), and to the third symbol among the symbols of each slot in a case of using the extended CP. In a case of the DM-RS linked to the PUCCH, the corresponding symbol may include a maximum of three symbols in each slot, and the number and the positions of the corresponding symbols are different depending on the aforementioned type of CPs and format of the PUCCH as represented in Table 3. When the mapping is completed, an SC-FDMA symbol is generated from the Resource Element (RE) mapped with the DM-RS sequence through the SC FDMA generator and a DM-RS signal is transmitted to the BS (S490).

When the signaling of 1 bit is additionally performed through the process of FIG. 4, contrary to the LTE, the LTE-A using a plurality of component carriers performs transmission by adding one bit to each component carrier for each subframe, so that there may occur a problem of additional overhead. In the meantime, since 4 bits including an additional 1 bit are required contrary to the signaling of 3 bits by using the DCI format 0 in the conventional LTE, it may be necessary to configure a DCI format different from that of the LTE. Hereinafter, a process of using the OCC without the separate signaling of 1 bit by UE and a configuration according to the process will be described.

The present specification provides a method and an apparatus, in which, in the allocation of a cyclic shift (CS) value and an OCC (Orthogonal Cover Code) to each layer of the Uplink (UL) Demodulation Reference Signal (DM-RS), when a cyclic shift (CS) value of the first layer determined by the scheduling by a higher terminal is signaled to the UE through the BS (eNB and the like), a cyclic shift (CS) value of another layer and an OCC of each layer are calculated and allocated based on the signaled value. Accordingly, the OCC for each layer may be indicated without additional signaling.

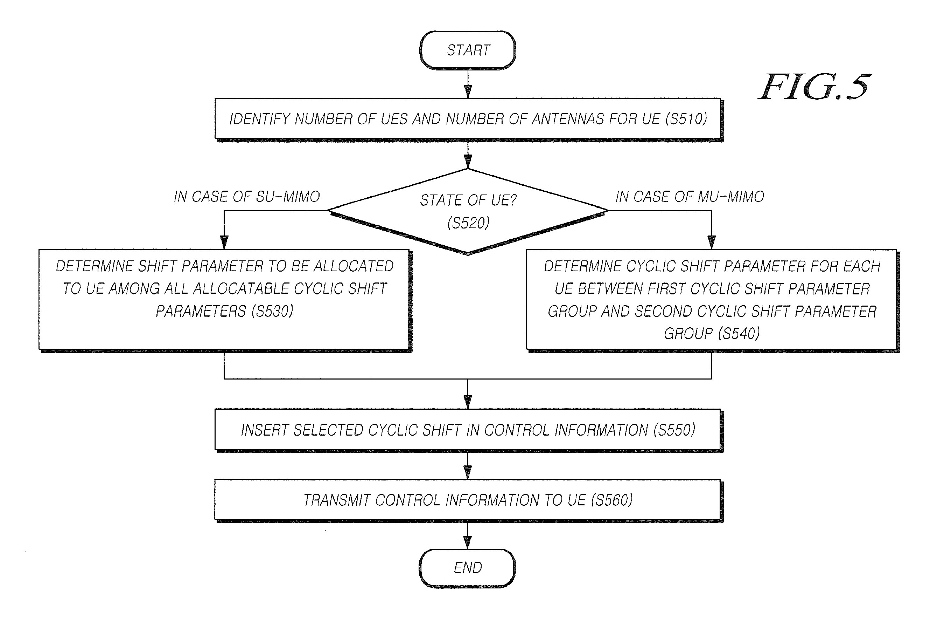

FIG. 5 is a diagram illustrating a process of setting and transmitting control information by the BS so that the UE may infer an OCC according to an exemplary embodiment of the present specification.

FIG. 5 illustrates a process of determining a cyclic shift parameter and transmitting the determined cyclic shift parameter to the UE so that the UE may infer the OCC, that is, the UE may calculate information related to orthogonality.

The exemplary embodiment of the present specification illustrates the calculation of $n_{DMRS}^{(2)}$ and an OCC index value for each layer based from a DCI format transferred from the eNB by the UE. The entire process presents a process of determining a multiple access state of one or more UEs by the eNB that is the BS, determining a cyclic shift parameter based on which information related to orthogonality may be calculated, and transmitting the determined cyclic shift parameter to the UE. The process will be described in more detail below.

The eNB identifies the number of UEs and the number of antennas (or layers) for each UE (S510). This includes a process of identifying if the UE is configured with the SU-MIMO or the MU-MIMO. When a multiple access state of the UE is the SU-MIMO as a result of the identification (SS20), the eNB determines a cyclic shift parameter to be allocated to the UE among all allocatable cyclic shift parameters (S530). An example of the cyclic shift parameter may be

$n_{DMRS}^{(2)}$. When a multiple access state of the UE is the MU-MIMO, for a plurality of UEs, the eNB determines a cyclic shift parameter for each of the plurality of UEs from a first cyclic shift parameter group and a second cyclic shift parameter group. For the plurality of UEs, all UEs may receive the cyclic shift parameters determined from only one group between the first shift parameter group and the second cyclic shift parameter group, but two UEs having non-equal bandwidth resource allocation essentially need to receive cyclic shift parameters determined from among the different cyclic shift parameter groups. In this case, first information related to the orthogonality calculated based on the first cyclic shift parameter group is determined so as to be different from second information related to the orthogonally calculated based on the second cyclic shift parameter group. The information related to the orthogonality may be calculated based on the cyclic shift parameter, so that the first cyclic shift parameter group and the second cyclic shift parameter group may be determined so that information related to specific orthogonality, for example, the OCC, may be calculated.

More specifically, all cyclic shift parameters allocatable to the UE may be divided into a first set and a second set, and an intersection of the first set and the second set is a null set. That is, the cyclic shift parameters included in the first set may not be included in the second set. The value of the cyclic shift parameter is set in a case where the first set is connected to the first information related to the orthogonality and the second set is connected to the second information related to the orthogonality, so that the information on the orthogonality is provided together. Here, the intersection of the two sets is a null set, so that the two sets are in the relation of a relative prime, and thus if a value of a specific cyclic shift parameter is identified, the set in which the specific cyclic shift parameter is included may be identified, and as a result, information for allocating orthogonality related to the corresponding set may also be identified.

That is, values available for $n_{DMRS}^{(2)}$ identified through the DCI format in Tables 5 to 8 below are divided into two sets, and one set indicates an OCC index of [1, 1] and the other set indicates an OCC index of [1, -1]. Accordingly, the OCC index may be identified according to the value of the cyclic shift parameter included in the received DCI format.

Further, $n_{DMRS}^{(2)}$ for each layer may be calculated according to a specific allocation rule by using the cyclic shift parameter expressed by 3 bits of the first received DCI format.

A case in which the number of sets is two according to the exemplary embodiment of the present specification may be applied to a case in which the number of information pieces related to the orthogonality is two, and when the number of information pieces related to other orthogonality is N, the cyclic shift parameters may be divided into N sets so that each intersection is a null set. Further, according to another exemplary embodiment of the present specification, the cyclic shift parameters may be discriminated through a function, not the set. That is, a function for mapping a predetermined cyclic shift parameter as the first information related to the orthogonality, and mapping another cyclic shift parameter as the second information related to the orthogonality may be used.

The eNB inserts the selected cyclic shift in the control information (S550). According to the exemplary embodiment of the present specification, the selected cyclic shift parameter may be inserted in the DCI (Downlink Control Information) format 0 of the PDCCH (Physical Data Control Channel).

Then, the eNB transmits the control information to the UE (S560).

The divided two or more sets in FIG. 5 may be an exemplary embodiment of groups to be described below. However, the present invention is not limited thereto, and is characterized in the transmission of information related to orthogonality even without separate transmission of information related to orthogonality.

In the meantime, a UE group 1 and a UE group 2 in the MU-MIMO environment are an exemplary embodiment of two or more user equipments with non-equal bandwidth resource allocation. That is, in a first UE group and a second UE group which are the groups of the UEs belonging to the group with the corresponding bandwidth in the two divided groups with non-equal bandwidth resource allocation in the MU-MIMO environment, respective cyclic shift parameters within the first cyclic shift parameter group which one or more UEs within the first UE group may receive and respective cyclic shift parameters within the second cyclic shift parameter group which one or more UEs within the second UE group may receive are determined, in which as described above, the first information related to the orthogonality calculated based on the first cyclic shift parameter group is determined to be different from the second information related to the orthogonality calculated based on the first cyclic shift parameter group.

Especially, the scheduling may be performed in such a manner that the two UEs with non-equal bandwidth resource allocation essentially receive the CS parameter values $n_{\mathrm{DMRS}}^{(2)}$ of different CS-OCC linkage groups (in the MU-MIMO environment, it is not necessary to perform the scheduling in such a manner that the two UEs with equal bandwidth resource allocation essentially receive the CS parameter values $n_{\mathrm{DMRS}}^{(2)}$ of different CS-OCC linkage groups).

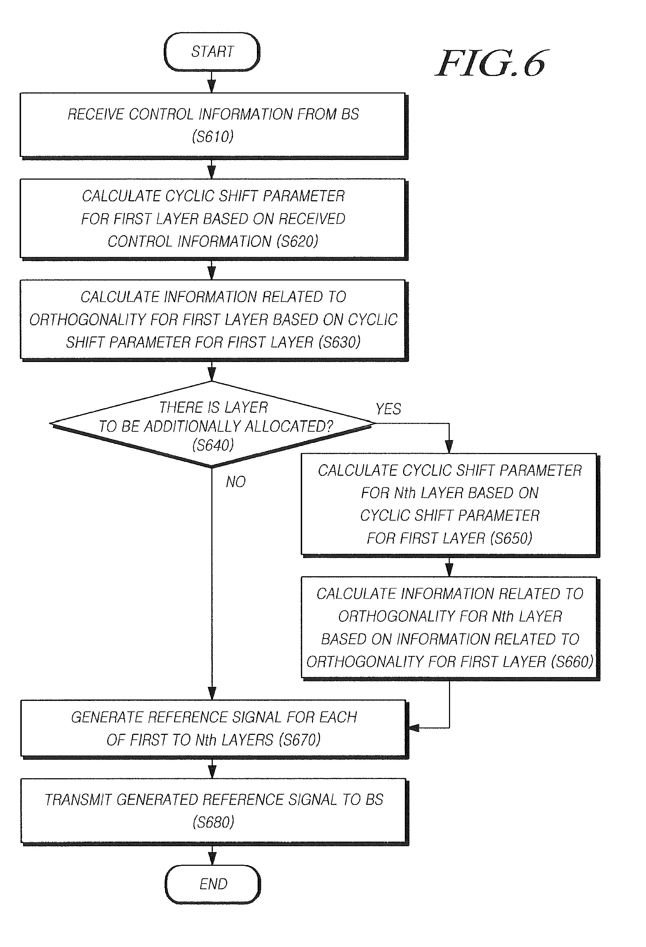

FIG. 6 is a diagram illustrating a process of inferring and setting the OCC based on the control information transmitted by the BS, by the UE, according to an exemplary embodiment of the present specification. The exemplary embodiment of the present specification illustrates the calculation of $n_{\mathrm{DMRS}}^{(2)}$ and an OCC index value for each layer based on the cyclic shift parameter transmitted through the DCI format from the eNB by the UE.

FIG. 6 illustrates a process of inferring an OCC from the received control information and generating a reference signal based on the inferred OCC by the UE.

The entire process includes receiving a cyclic shift parameter for a first layer from the BS and calculating information related to orthogonality for the first layer based on the received cyclic shift parameter for the first layer by the UE using one or more layers, when there is a layer to be additionally allocated, calculating a cyclic shift parameter for the additionally allocated corresponding layer based on the cyclic shift parameter for the first layer, calculating information related to orthogonality on the additionally allocated corresponding layer based on the information related to the orthogonality for the first layer, generating a reference signal for the first layer by using the cyclic shift parameter for the first layer and the information related to the orthogonality for the first layer, generating a reference signal for the additionally allocated corresponding layer by using the cyclic shift parameter for the additionally allocated corresponding layer and the information related to the orthogonality for the additionally allocated corresponding layer, and transmitting the generated reference signals to the BS.

The process will be described in more detail below. The control information is received from the BS (S610). An exemplary embodiment of the control information may be information which is loaded into the PDCCH and transmitted. The control information may be expressed as the cyclic shift parameter of 3 bits as represented in Table 2, and a value of the cyclic shift parameter for the first layer is calculated through the control information based on the relationship in Table 2 (S620). In a case of the PDCCH, the cyclic shift parameter for the first layer may be included in the DCI format 0. Then, the information related to the orthogonality for the first layer is calculated based on the cyclic shift parameter for the first layer (S630). An example of the information related to the orthogonality for the first layer may be indication information on the OCC. The information related to the orthogonality for the first layer may be calculated based on the cyclic shift parameter for the first layer by a predetermined function or through a group in which the cyclic shift parameter for the first layer is included. That is, there is a characteristic in that the cyclic shift parameter for the first layer is included in a specific cyclic shift parameter group, and the information related to the orthogonality for the first layer corresponds to information related to orthogonality, such as the OCC, linked to the specific cyclic shift parameter group in which the cyclic shift parameter for the first layer is included. Here, the specific cyclic shift parameter group refers to any one set between the aforementioned two sets having a relation of a relative prime, a set in which the cyclic shift parameter is included may be identified by using a specific cyclic shift parameter, and as a result, information for allocating orthogonality related to the corresponding set may also be identified. That is, values available to $n_{\mathrm{DMRS}}^{(2)}$ identified through the DCI format in Tables 5 to 8 are divided into two sets, and one set indicates an OCC index of [1, 1] and the other set indicates an OCC index of [1, -1]. Accordingly, the OCC index may be identified according to the value of the cyclic shift parameter included in the received DCI format.

The cyclic shift parameter for the first layer and the information related to the orthogonality for the first layer are used for the generation of the reference signal for the first layer.

It is determined if there is a layer to be additionally allocated (S640). When there is the layer to be additionally allocated, a cyclic shift parameter for the additionally allocated corresponding layer is calculated based on the cyclic shift parameter for the first layer (S650). Likewise, information related to orthogonality for the additionally allocated corresponding layer is calculated based on the information related to the orthogonality for the first layer (S660).

Then, when there is no layer to be additionally allocated, a reference signal for each of first to $N^{th}$ layers (S670). Then, the generated reference signals are transmitted to the BS (S680). An exemplary embodiment of the reference signal may be the DM-RS.

The information related to the orthogonality may be information indicating an orthogonality cover code.

As illustrated in FIGS. 5 and 6, eNB generates $n_{\mathrm{DMRS}}^{(2)}$ for the inference of the OCC value without the separate setting of the OCC value. That is, the UE calculates a corresponding OCC value from DMRS received through the DCI format, and the like, and applies the calculated OCC value. A process of calculating the OCC value based on $n_{\mathrm{DMRS}}^{(2)}$ may be variously implemented. As discussed in Table 4, when the OCC values are 0 and 1, the UE may divide the value of $n_{\mathrm{DMRS}}^{(2)}$ by 2 and choose a remainder value as the OCC value. For another exemplary embodiment, a method of linking $n_{\mathrm{DMRS}}^{(2)}$ and the OCC in advance may be considered.

As the exemplary embodiment of the present specification, as represented in Table 2, the values of $n_{\mathrm{DMRS}}^{(2)}$ indicated by 8 values including a CS field of 3 bits in the DCI format 0 in the LTE system are grouped by every four values to configure two CS-OCC linkage groups. $n_{\mathrm{DMRS}}^{(2)}$ that is a CS parameter value within each group is linked to the same $n_{\mathrm{DMRS}}^{OCC}$, that is, one OCC index, and a CS parameter value $n_{\mathrm{DMRS}}^{(2)}$ of another group is linked to $n_{\mathrm{DMRS}}^{OCC}$ that is another OCC index. An exemplary embodiment of the group is represented in Table 5. However, a method of dividing the CS parameter values $n_{\mathrm{DMRS}}^{(2)}$ into two groups is not limited to the configuration and the allocation represented in Table 5. Accordingly, the CS parameter values may be grouped so as to equally distribute the DM-RS and maximally secure orthogonality. For example, considering four CS parameter values {0,3,6,9} applicable in four layers of rank 4, the four CS parameter values may be equally crossed and grouped so that {0,6} has the OCC index value of 0, and {3,9} has the OCC index value of 1.

In a case where $n_{\mathrm{DMRS}}^{(2)}$ is 0, 6, 4, or 10 in Table 5, the UE allocates the OCC as [+1, +1] because the OCC index is 0. On the other hand, in a case where $n_{DMRS}^{(2)}$ is 3, 9, 2, or 8, the UE allocates the OCC as [+1, -1] because the OCC index is 1.

[Table 5] CS-OCC linkage rule

| CS parameter | CS parameter $n_{DMRS}^{(2)}$ | OCC index $n_{DMRS}^{OCC}$ |
|---|---|---|
| CS-OCC linkage group A | $n_{DMRS}^{(2)}$ {0,6,4,10} | $n_{DMRS}^{OCC} = 0 ( [+1, +1] )$ |
| CS-OCC linkage group B | $n_{DMRS}^{(2)}$ : {3,9,2,8} | $n_{DMRS}^{OCC} = 0 ( [+1, 1] )$ |

Table 5 represents the group as an exemplary embodiment in which the OCC may infer from the CS, and in addition, the eNB and the UE may share information (for example, $n_{DMRS}^{(2)}$ mod 2) on a function having the CS value as an input value. It is a matter of course that contents represented in Table 5 may be implemented in one function. When the CS-OCC linkage rule of the present specification is applied, when the BS sets the cyclic shift value of the DCI format and transmits the set cyclic shift value to the UE, the UE may identify the value of the $n_{DMRS}^{(2)}$ and the OCC index from the received cyclic shift value.

That is, when Table 2 is combined with Table 5, the CS-OCC linkage rule may be applied as follows ("+1" is the same as "1").

| Cyclic Shift (DCI format) | $n_{DMRS}^{(2)}$ | $n_{DMRS}^{OCC}$ |
|---|---|---|
| 000 | 0 | 0 ($\rightarrow$[1, 1]) |
| 001 | 6 | 0 ($\rightarrow$(1,1]) |
| 010 | 3 | 1 ($\rightarrow$[11,-1]) |
| 011 | 4 | 0 ($\rightarrow$[1,1]) |
| 100 | 2 | 1 ($\rightarrow$[1,-1]) |
| 101 | 8 | 1 ($\rightarrow$[1,-1]) |
| 110 | 10 | 0 ($\rightarrow$[1,1]) |
| 111 | 9 | 1 ($\rightarrow$[1,-1]) |

It is a matter of course that the CS-OCC linkage rule may be varied in the process of the implementation. In order to divide a total of 8 DCI formats into two groups including four DCI formats and match the two groups to two OCC index values, the total number of cases is 140 (8C4 * 2), and this may be preset in the implementation process or the BS and the UE may share the set information.

That is, the linkage rule may be variously set as represented in Tables 6 to 8 below.

[Table 6] Exemplary embodiment of CS-OCC linkage rule

| CS parameter | CS parameter (2) $n_{DMRS}^{(2)}$ | OCC index $n_{DMRS}^{OCC}$ |
|---|---|---|
| CS-OCC linkage group A | $n_{DMRS}^{(2)}$ {0,6,4,10} | $n_{DMRS=1}^{OCC}([1, -1])$ |
| CS-OCC linkage group B | $n_{DMRS}^{(2)}$ : {3,9,2,8} | $n_{DMRS=0}^{OCC}([1, 1])$ |

[Table 7] Exemplary embodiment of CS-OCC linkage rule

| CS parameter | CS parameter $n_{DMRS}^{CS(2)}$ | OCC index $n_{DMRS}^{OCC}$ |
|---|---|---|
| CS-OCC linkage group A | $n_{DMRS}^{(2)}$ {3,6,8,10} | $n_{DMRS=1}^{OCC}([1, -1])$ |
| CS-OCC linkage group B | $n_{DMRS}^{(2)}$ : | $n_{DMRS=0}^{OCC}([1, 1])$ |

[Table 8] Exemplary embodiment of CS-OCC linkage rule

| CS parameter | CS parameter $n_{DMRS}^{CS(2)}$ | OCC index $n_{DMRS}^{OCC}$ |
|---|---|---|
| CS-OCC linkage group A | $n_{DMRS}^{(2)}$ : {3,6,8,10} | $n_{DMRS=0}^{OCC}([1, 1])$ |
| CS-OCC linkage group B | $n_{DMRS}^{(2)}$ : {0,9,2,4} | $n_{DMRS=1}^{OCC}([1, -1])$ |

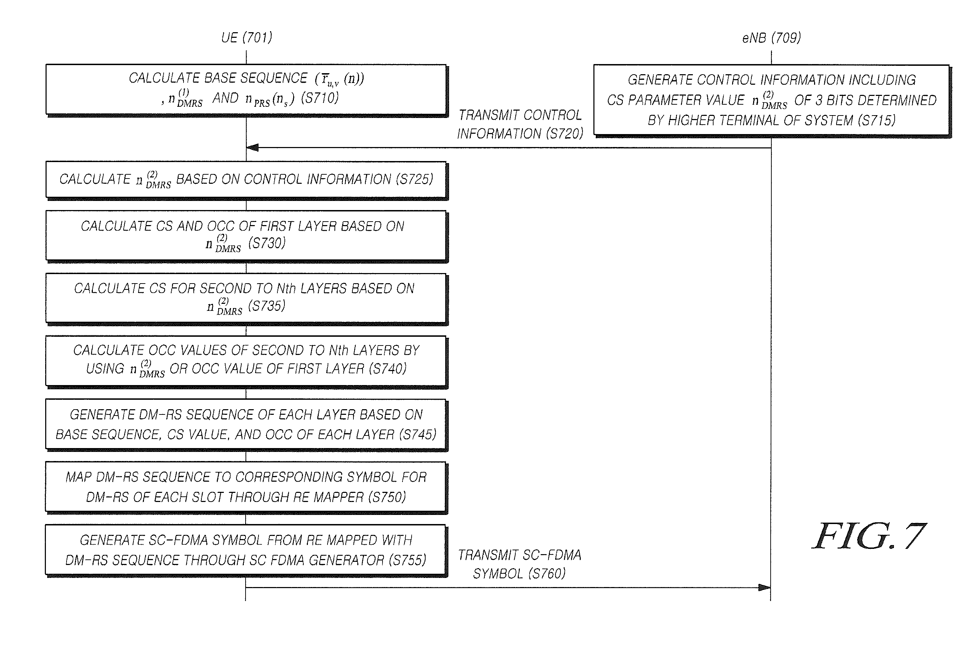

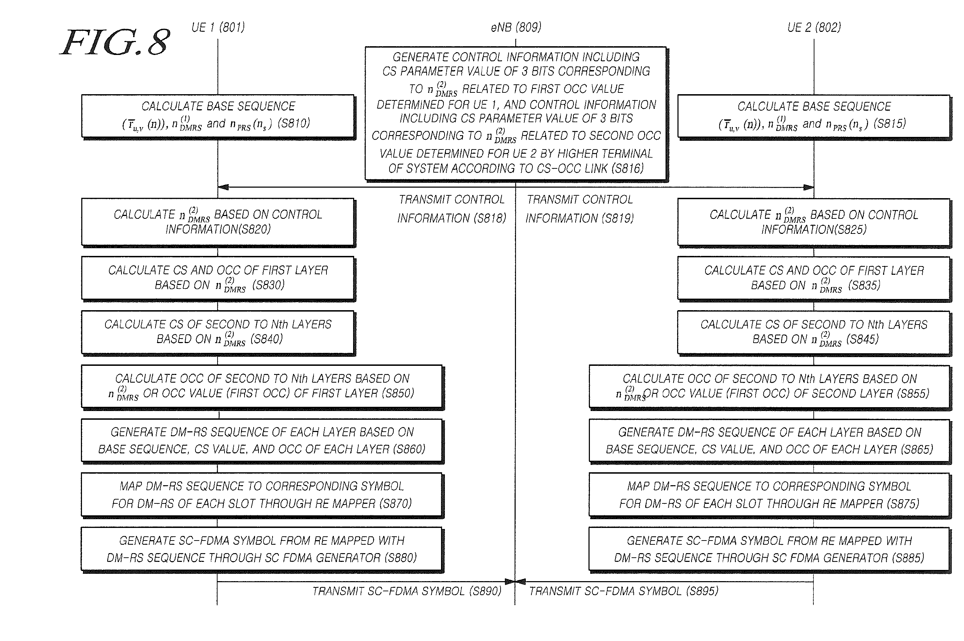

Hereinafter, in a case of the SU-MIMO and a case of the MU-MIMO, a method of allocating a value of a CS parameter $n_{DMRS}^{(2)}$ by the eNB and a process of calculating the OCC, generating a reference signal, and transmitting the generated reference signal based on the method by the UE according to an exemplary embodiment of the present specification will be described with reference to FIGs. 7 and 8.

FIG. 7 is a diagram illustrating a process of calculating and setting an OCC based on control information transmitted by the BS in the SU-MIMO by the UE according to an exemplary embodiment of the present specification.

The UE 701 calculates, for the UL DM-RS sequence, a base sequence $\bar{r}_{u,v}(n)$ based on the Zadoff-Chu se-quence, $n_{DMRS}^{(1)}$ given by a higher layer as represented in Table 1 and $n_{PRS}(n_s)$ as expressed in Equation 2 as cyclic shift parameters necessary for calculation of a CS value (S710). The base sequence is differently generated depending on a group number u, a base sequence number v within a group, and a length n of the sequence. However, the base sequences of the UL DM-RS occupying the same BS (cell and the like) and slot time and the same frequency bandwidth are the same. As a result, a parameter actually transmitted through the BS (eNB and the like) by scheduling by the higher terminal is $n_{DMRS}^{(2)}$, and the CS (cyclic shift) of the UL DM-RS has different values according to the

value of $n_{\mathrm{DMRS}}^{(2)}$.

S710 may proceed after several steps of FIG. 7 by reflecting the configuration of the system or the multiple access state, and may proceed with combination of various steps of FIG. 7.

In the meantime, the BS (eNB and the like) generates a control signal by inserting the DCI format 0 including a parameter of 3 bits determined so as to indicate the CS parameter $n_{\mathrm{DMRS}}^{(2)}$ for each UE by the higher terminal of the system in the control signal (S715). In S715, the BS determines if each target UE for the scheduling is operated in the SU-MIMO or operated as one UE in the MU-MIMO in the higher terminal, when the corresponding UE is operated in the SU-MIMO, the BS transmits the CS parameter expressed by 3 bits regardless of the CS-OCS linkage group of FIG. 5. That is, in a case of the SU-MIMO, the CS parameter expressed by 3 bits indicating $n_{\mathrm{DMRS}}^{(2)}$ determined for each UE by the higher terminal of the system has one among a total of 8 values including CS-OCC linkage group A and CS-OCC linkage group B represented in Table 5, and is transmitted for each UE.

The BS transmits the generated control information (S720). More specifically, the value of 3 bits may be loaded into a CS (cyclic shift) field and transmitted.

The UE calculates $n_{\mathrm{DMRS}}^{(2)}$ based on the CS parameter expressed by 3 bits among the received control information (S725).

Then, a CS value and an OCC value of the first layer may be calculated, in which $n_{CS}$ and $\alpha$ are (2) calculated based on $n_{\mathrm{DMRS}}^{(2)}$ by Equation 2, and $n_{\mathrm{DMRS}}^{OCC}$ is calculated based on the value of $n_{\mathrm{DMRS}}^{(2)}$ in Table 5 to calculate the OCC (S730).

For example, when the value of $n_{\mathrm{DMRS}}^{(2)}$ is 0, the value of $n_{\mathrm{DMRS}}^{OCC}$ is 0, and as a result, the OCC may have [+1, +1]. For example, when the value of the transmitted $n_{\mathrm{DMRS}}^{(2)}$ is one among 0, 6, 4, and 10 corresponding to CS-OCC linkage group A of Table 5, $n_{\mathrm{DMRS}}^{OCC}$ is automatically calculated as 0 by Table 5 even without separate reception of information. On the contrary, when the value of the transmitted $n_{\mathrm{DMRS}}^{(2)}$ is one among 3, 9, 2, and 8 corresponding to CS-OCC linkage group B of Table 5, $n_{\mathrm{DMRS}}^{OCC}$ is automatically calculated as 1 by Table 5 even without separate reception of information. In this case, in Table 5 when $n_{\mathrm{DMRS}}^{OCC}$ is 0, it means that the OCC is {+1, +1}, and when $n_{\mathrm{DMRS}}^{OCC}$ is 1, it means that the OCC is {+1, -1}, but a mathematical expression and a value of a parameter expressing the OCC index are not limited within a scope in which the meaning and the contents are not changed.

When the CS value and the OCC value for the first layer are set, it is identified whether there is a layer to be additionally allocated, and when there is a layer to be additionally allocated, a CS value of the layer, i.e. a second to an $N^{th}$ layer, to be additionally allocated, is calculated based on $n_{\mathrm{DMRS}}^{(2)}$ of the first layer (S735).

Here, a rule (CS allocation method and CS allocation rule) of calculating the CS value $\alpha$ of the corresponding layer based on the CS parameter value $n_{\mathrm{DMRS}}^{(2)}$ of the first layer may be applied, and this rule sets the CS values allocated to the respective layers to have the largest distance therebetween so as to decrease interlayer interference.

As an exemplary embodiment of the CS allocation rule in which the CS values allocated to the respective layers according to the number of respective layers have the largest distance therebetween, Equation 3 below may be referred to. Equation 3 stipulates two representative cases as the exemplary embodiment of the CS allocation rule. However, the CS allocation rule is not limited to the two cases of Equation 3, but may be constituted in various cases within the scope in which orthogonality in the respective layers may be maximally secured. Equation 3 states two representative cases as exemplary embodiments of the CS allocation rule. However, the CS allocation rule is not limited to the two cases of Equation 3 and may be constituted in various cases within a limit in which orthogonality of the respective layers may be maximally secured.

[Equation 3]

A. CS allocation rule - 1

$n_{DMRS}^{(2)}$ : CS parameter of first layer

In SU-MIMO, $n_{DMRS}^{(2)} \in \{0, 6, 3, 4, 2, 8, 10, 9\}$

In MU-MIMO, $n_{DMRS}^{(2)} \in \{0, 6, 4, 10\}$ or $n_{DMRS}^{(2)} \in \{3, 9, 2, 8\}$

1) In a case of Rank 2

$\{ n_{DMRS}^{(2)}$ of first layer, $n_{DMRS}^{(2)}$ of second layer$\}$ =

$\{ n_{DMRS}^{(2)}, (n_{DMRS}^{(2)} + 6) \bmod 12 \}$

2) In a case of Rank 3

$\{ n_{DMRS}^{(2)}$ of first layer, $n_{DMRS}^{(2)}$ of second layer,

$n_{DMRS}^{(2)}$ of third layer$\}$ = $\{ n_{DMRS}^{(2)}, (n_{DMRS}^{(2)} + 4) \bmod 12,$

$(n_{DMRS}^{(2)} + 8) \bmod 12 \}$

3) In a case of Rank 4

$$\{ n^{(2)}_{DMRS} \text{ of first layer, } n^{(2)}_{DMRS} \text{ of second layer,}$$

$$n^{(2)}_{DMRS} \text{ of third layer, } n^{(2)}_{DMRS} \text{ of fourth layer}\} =$$

$$\{ n^{(2)}_{DMRS}, (n^{(2)}_{DMRS} + 3)\bmod 12, (n^{(2)}_{DMRS} + 6)\bmod 12, (n^{(2)}_{DMRS} + 9)\bmod 12 \}$$

B. CS allocation rule – 2

$n^{(2)}_{DMRS}$: CS parameter of first layer

In SU-MIMO, $n^{(2)}_{DMRS} \in \{0,6,3,4,2,8,10,9\}$

In MU-MIMO, $n^{(2)}_{DMRS} \in \{0,6,4,10\}$ or $n^{(2)}_{DMRS} \in \{3,9,2,8\}$

1) <u>In a case of Rank 2</u>

$$\{ n^{(2)}_{DMRS} \text{ of first layer, } n^{(2)}_{DMRS} \text{ of second layer}\} =$$

$$\{ n^{(2)}_{DMRS}, (n^{(2)}_{DMRS} + 6)\bmod 12 \}$$

2) <u>In a case of Rank 3</u>

$$\{ n^{(2)}_{DMRS} \text{ of first layer, } n^{(2)}_{DMRS} \text{ of second layer,}$$

$$n^{(2)}_{DMRS} \text{ of third layer}\} = \{ n^{(2)}_{DMRS}, (n^{(2)}_{DMRS} + 4)\bmod 12, (n^{(2)}_{DMRS} + 8)\bmod 12 \}$$

3) <u>In a case of Rank 4</u>

$$\{ n^{(2)}_{DMRS} \text{ of first layer, } n^{(2)}_{DMRS} \text{ of second layer,}$$

$$n^{(2)}_{DMRS} \text{ of third layer, } n^{(2)}_{DMRS} \text{ of fourth layer}\} =$$

$$\{ n^{(2)}_{DMRS}, (n^{(2)}_{DMRS} + 6)\bmod 12, (n^{(2)}_{DMRS} + 3)\bmod 12, (n^{(2)}_{DMRS} + 9)\bmod 12 \}$$

When CS allocation rule-2 of Equation 3 is expressed by the table considering the rank, i.e. the case in which the number of layers is up to four, $n^{(2)}_{DMRS, \lambda}$ ($\lambda = 0, ..., 3$) allocated to the maximum of four layers is represented in Table 9.

[Table 9]

| Values of $n^{(2)}_{\text{DMRS},\lambda}$ allocated to each layer according to CS allocation rule-2 | | | | |
|---|---|---|---|---|
| Cyclic Shift (DCI format) | $\lambda^{\text{th}}\, n^{(2)}_{\text{DMRS}}$ $(\, n^{(2)}_{\text{DMRS},\lambda}\,)$ | | | |
| | $\lambda = 0$ | $\lambda = 0$ | $\lambda = 0$ | $\lambda = 0$ |
| 000 | 0 | 6 | 3 | 9 |
| 001 | 6 | 0 | 9 | 3 |
| 010 | 3 | 9 | 6 | 0 |
| 011 | 4 | 10 | 7 | 1 |
| 100 | 2 | 8 | 5 | 11 |
| 101 | 8 | 2 | 11 | 5 |
| 110 | 10 | 4 | 1 | 7 |
| 111 | 9 | 3 | 0 | 6 |

First layer of Equation 3 means the first layer. Second layer, third layer, ... mean the second layer, the third layer, and the like. Rank means the number of layers.

In Equation 3, in a case of Rank 2 (that is, in a case where the number of layers is two), the CS values of the first and second layers are set to have an interval of 6 (180 degrees) so that the layers are maximally spaced apart from each other within 360 degrees. In a case of Rank 3, the CS values are set to have an interval of 4 (120 degrees) so that the layers are maximally spaced apart from each other within 360 degrees, and in a case of Rank 4, the CS values are set to have an interval of 3 (90 degrees) so that the layers are maximally spaced apart from each other within 360 degrees.

Accordingly, when the CS value of the first layer is set, another layer is subsequently to have the largest distance from the CS value according to the rank number by comparing the first layer.

After the CS value for each layer is calculated, the OCC indexes of the second to Nth layers are calculated based on $n^{(2)}_{\text{DMRS}}$ or the OCC of the first layer (S740). As described above, the OCC of the first layer has been calculated based on $n^{(2)}_{\text{DMRS}}$ by the method of Table 5. Further, the OCC may also be allocated so as to have orthogonality. The OCCs of the second layer, the third layer, ... may be allocated and calculated based on the OCC (that is, the value calculated based on $n^{(2)}_{\text{DMRS}}$) of the first layer. To this end, considering the total number of layers, the OCC allocation rule makes the OCC values allocated to the respective layers have maximum orthogonality when the OCC values allocated to the respective layers are linked to the preset available CS values so as to maximally decrease interlayer interference. Equation 4 below sets the value of $n^{OCC}_{\text{DMRS}}$ so that the value of $n^{OCC}_{\text{DMRS}}$ varies for the first, second, third, and fourth layers in order to maximally secure orthogonality like Equation 3.

For example, when $n^{OCC}_{\text{DMRS}}$ of the first layer is 0, $n^{OCC}_{\text{DMRS}}$ of a next layer is 1 and $n^{OCC}_{\text{DMRS}}$ of a layer after the next layer is 0 again. Equation 4-A represents the aforementioned process. When a predetermined value is given to the first layer, the predetermined value is subtracted from 1, so that the OCC value of the next layer is changed.

However, in a case of the non-equal sized resource allocation in the MU-MIMO, when the value of $n^{OCC}_{\text{DMRS}}$ is set to be changed in each layer for each EU, it may be difficult to apply the OCC that is the sole method capable of securing orthogonality between two UEs of the MU-MIMO. Accordingly, in this case, it is not preferable to set so that the value of $n_{DMRS}^{OCC}$ is changed. However, in the situation of the non-equal sized resource allocation in the MU-MIMO, in a case of considering that the maximum rank is 4 and the maximum rank for each UE is 2, and considering that performance gain in a case of using two layers is not large compared to a case of using four layers in the SU-MIMO, as represented in Equation 4-B, the values of $n_{DMRS}^{OCC}$ of the first layer and the second layer may be set to have the same value, and the values of $n_{DMRS}^{OCC}$ of the third layer and the fourth layer may be set to have the values different from the value of the first layer and the second layer.

[Equation 4]

A. OCC Allocation Rule - 1

$n_{DMRS}^{OCC}$ : OCC Index of first layer

$n_{DMRS}^{OCC} = 0 \rightarrow [+1, +1]$

$n_{DMRS}^{OCC} = 1 \rightarrow [+1, -1]$

1) <u>In a case of Rank 2</u>

$\{n_{DMRS}^{OCC} \text{ of first layer}, n_{DMRS}^{OCC} \text{ of second layer}\} =$

$\{n_{DMRS}^{OCC}, 1 - n_{DMRS}^{OCC}\}$

2) <u>In a case of Rank 3</u>

$\{n_{DMRS}^{OCC} \text{ of first layer}, n_{DMRS}^{OCC} \text{ of second layer}, ,$

$n_{DMRS}^{OCC}$ of third layer$\} = \{n_{DMRS}^{OCC}, 1-n_{DMRS}^{OCC}, n_{DMRS}^{OCC}\}$

3) In a case of Rank 4

$\{n_{DMRS}^{OCC}$ of first layer, $n_{DMRS}^{OCC}$ of second layer, ,

$n_{DMRS}^{OCC}$ of third layer, $n_{DMRS}^{OCC}$ of fourth layer$\} =$

$\{n_{DMRS}^{OCC}, 1-n_{DMRS}^{OCC}, n_{DMRS}^{OCC}, 1-n_{DMRS}^{OCC}\}$

B. OCC Allocation Rule - 2

$n_{DMRS}^{OCC}$ : OCC Index of first layer

$n_{DMRS}^{OCC} = 0 \rightarrow [+1, +1]$

$n_{DMRS}^{OCC} = 1 \rightarrow [+1, -1]$

1) In a case of Rank 2

$\{n_{DMRS}^{OCC}$ of first layer, $n_{DMRS}^{OCC}$ of second layer$\} =$

$\{n_{DMRS}^{OCC}, n_{DMRS}^{OCC}\}$

2) In a case of Rank 3

$\{n_{DMRS}^{OCC}$ of first layer, $n_{DMRS}^{OCC}$ of second layer, ,

$n_{DMRS}^{OCC}$ of third layer$\} = \{n_{DMRS}^{OCC}, n_{DMRS}^{OCC}, 1-n_{DMRS}^{OCC}\}$

3) In a case of Rank 4

$\{n_{DMRS}^{OCC}$ of first layer, $n_{DMRS}^{OCC}$ of second layer, ,

$n_{DMRS}^{OCC}$ of third layer, $n_{DMRS}^{OCC}$ of fourth layer$\} =$

$\{n_{DMRS}^{OCC}, n_{DMRS}^{OCC}, 1-n_{DMRS}^{OCC}, 1-n_{DMRS}^{OCC}\}$

The OCC index for each layer of the UE having the plurality of layers may be set based on one cyclic shift parameter by using the OCC allocation rule and the CS-OCC linkage rule. As described above, the reason is that the specific OCC index may be identified based on the cyclic shift parameter according to the CS-OCC linkage rule, and when the OCC allocation rule is used, the OCC index may be allocated to each layer by using the identified OCC index.

When the calculation of the CS and the OCC for the allocated layers is completed, a DM-RS sequence of each layer is generated for each layer by applying Equation 1 to the base sequence and the CS (cyclic shift) value α set for each layer, and a final UL DM-RS sequence is generated by multiplying a sequence value (+1 or -1) of the OCC index set for each layer (S745). That is, when the OCC is {+1, +1}, the DM-RS sequence of the first symbol (or the first slot of one subframe when the number of symbols is one for each slot) directly employs a value of Equation 1, and the DM-RS sequence of the second symbol (or the second slot of one subframe when the number of symbols is one for each slot) also directly employs the value of Equation 1. When the OCC is {+1, -1}, the DM-RS sequence of the first symbol (or the first slot of one subframe when the number of symbols is one for each slot) directly employs the value of Equation 1, but the DM-RS sequence of the second symbol (or the second slot of one subframe when the number of symbols is one for each slot) employs a value obtained by multiplying the value of Equation 1 by -1.

Then, the generated DM-RS sequence is mapped to a corresponding symbol of each slot through the resource element mapper (S750). The symbol mapped with the DM-RS linked to the PUSCH corresponds, as described above, to the fourth symbol among the seven symbols of each slot in a case of using the normal CP (cyclic prefix) and to the third symbol among the symbols of each slot in a case of using the extended CP. In a case of the DM-RS linked to the PUCCH, the corresponding symbol may include a maximum of three symbols in each slot, and the number and the positions of the corresponding symbols are different depending on the aforementioned type of CPs and format of the PUCCH as represented in Table 3. When the mapping is completed, an SC-FDMA symbol is generated from the Resource Element (RE) mapped with the DM-RS sequence through the SC FDMA generator and a DM-RS signal is transmitted to the BS (S760).

FIG. 8 is a diagram illustrating a process of calculating and setting an OCC based on control information transmitted by the BE in the MU-MIMO by the UE according to an exemplary embodiment of the present specification. FIG. 8 illustrates a process of, in two UE groups including a first UE group and a second UE group, for a UE1 801 that is one UE within the first UE group and a UE2 802 that is one UE within the second group UE, setting a CS parameter expressible by a value of 3 bits and transmitting the set CS parameter to control information by an eNB 809 that is a BS. Here, each UE group may include one or more UEs, but in general, each UE group corresponds to one UE in a case of considering two UEs. In this case, the UEs 801 and 802 may calculate the OCC value through the CS parameter without separate signaling.

Each of the UE1 801 and the UE2 802 calculates, for the UL DM-RS sequence, a base sequence $\bar{r}_{u,v}(n)$ based on the Zadoff-Chu sequence, and $n_{\mathrm{DMRS}}^{(1)}$ given by a higher layer as represented in Table 1 and $n_{\mathrm{PRS}}(n_s)$ as expressed in Equation 2 as parameters necessary for calculation of a CS value (S810 and S815). The base sequence is differently generated depending on a group number, a base sequence number within a group, and a length n of the sequence. However, the base sequences of the UL DM-RS occupying the same BS (cell and the like) and slot time and the same frequency bandwidth are the same. As a result, the parameter actually transmitted through the BS (eNB and the like) by scheduling by a higher terminal is $n_{\mathrm{DMRS}}^{(2)}$, and the CS (cyclic shift) value of the UL DM-RS is varied according to the value of $n_{\mathrm{DMRS}}^{(2)}$.

S810 and S815 may proceed after several steps of FIG. 8 by reflecting the configuration of the system or the multiple access state, and may proceed with a combination of various steps of FIG. 7.

In the meantime, the BS (eNB and the like) generates a control signal by inserting a parameter expressible by 3 bits indicating the value of the CS parameter $n_{\mathrm{DMRS}}^{(2)}$ determined for each UE by the higher terminal of the system in the control signal, such as the DCI format 0 (S816). In S816, the BS determines if each target UE for the scheduling is operated in the SU-MIMO or operated as one UE in the MU-MIMO in the higher terminal, and when the corresponding UE is operated in the MU-MIMO, the BS allocates $n_{\mathrm{DMRS}}^{(2)}$ included in the different groups to the respective UEs considering the CS-OCC linkage group of FIG. 5 (S816).

Here, the CS parameter value $n_{\mathrm{DMRS}}^{(2)}$ is indicated by the CS parameter expressed by 3 bits transmitted through the control information, such as the DCI format 0, in which in a case of the MU-MIMO, the CS parameter of 3 bits indicating the CS parameter value $n_{\mathrm{DMRS}}^{(2)}$ determined for each UE by the higher terminal of the system transmits one of the four values of CS-OCC linkage group A of FIG. 5 to the UE1 801, and one of the four values of CS-OCC linkage group B of FIG. 5 to the UE1 802. More specifically, in a case of the MU-MIMO, when the BS (eNB and the like) performs the scheduling in order to determine the CS parameter value $n_{\mathrm{DMRS}}^{(2)}$ for each UE by the higher terminal of the system, the respective UEs may be scheduled so as to select the CS parameter values $n_{\mathrm{DMRS}}^{(2)}$ of the different CS-OCC linkage groups. That is, the higher terminal of the system allocates $n_{\mathrm{DMRS}}^{(2)}$ related to the first OCC value to the UE1 801 as the value of the CS parameter and $n_{\mathrm{DMRS}}^{(2)}$ related to the second OCC value to the UE2 802 as the value of the CS parameter, so that the UE1 and the UE2 may allocate different OCCs depending on the values of $n_{\mathrm{DMRS}}^{(2)}$.

Especially, the two UEs with the non-equal bandwidth resource allocation may be scheduled to essentially receive the allocation of the CS parameter values $n_{\mathrm{DMRS}}^{(2)}$ of the different CS-OCC linkage groups (in the MU-MIMO environment, the two UEs with equal bandwidth resource allocation do not need to be scheduled to essentially receive the CS parameter values $n_{\mathrm{DMRS}}^{(2)}$ of the different CS-OCC linkage groups). That is, when the UE1 801 is scheduled to receive the allocation of one among the four CS parameter values $n_{\mathrm{DMRS}}^{(2)}$ of CS-OCC linkage group A related to a case in which the OCC value is 0, the other UE is scheduled to receive the allocation of one among the four CS parameter values $n_{\mathrm{DMRS}}^{(2)}$ of CS-OCC linkage group B related to a case in which the OCC value is 1. For example, when the UE1 receives the allocation of 0 that is one among the four values of CS-OCC linkage group A as the CS parameter value $n_{\mathrm{DMRS}}^{(2)}$ for a specific layer, the UE2 receives the allocation of 3 that is one among the four values of CS-OCC linkage group B as the CS parameter value $n_{\mathrm{DMRS}}^{(2)}$ for the same layer. In this case, the two UEs in the MU-MIMO environment essentially have the different OCC indexes, so that the two UEs may be always discriminate. For the convenience of description, it is assumed that 0 of CS-OCC linkage group A is allocated to the UE1 801 as $n_{\mathrm{DMRS}}^{(2)}$ in relation to a case in which the value of a first OCC is 0, and 3 of CS-OCC linkage group B is allocated to the UE1 801 as $n_{\mathrm{DMRS}}^{(2)}$ in relation to a case in which the value of a second OCC is 1, as an exemplary embodiment of FIG. 8.

The BS generates the control information by inserting the CS parameter expressible by 3 bits for indicating $n_{\mathrm{DMRS}}^{(2)}$ differently set for each UE in the control information (S816), and transmits the generated control information to the UEs (S818 and S819). More specifically, the value of 3 bits may be loaded into a CS (cyclic shift) field of the DCI format 0.

Further, the transmission in steps S818 and S819 may be performed sequentially or with a time interval, and also in step S816, the control information may be generated and transmitted to the UE1 and the UE2 with a time interval. Further, the processes performed by the UE1 and the UE2 may be independently performed, so that the respective processes of the UE1 and the respective processes of the UE2 are limited to a specific temporal order and the simultaneous performance. Hereinafter, the processes themselves proceeded by both UE1 and UE2 are the same in the dependent process, so that the description thereof will be provided together. However, the description does not mean that the respective processes of FIG. 8 simultaneously proceed or proceed with a specific correlation in the UE1 and the UE2.

Each of the UE1 and the UE2 calculates the CS parameter value $n_{\mathrm{DMRS}}^{(2)}$ based on the CS parameter expressed by 3 bits among the received control information according to the relation of Table 2 (S820 and S825).

Then, a CS value and an OCC value of the first layer are calculated. $n_{\mathrm{CS}}$ and $\alpha$ are calculated based on

$n_{\mathrm{DMRS}}^{(2)}$ in Equation 2, and $n_{\mathrm{DMRS}}^{OCC}$ is calculated based on the value of $n_{\mathrm{DMRS}}^{(2)}$ in Table 5 to calculate the OCC (2) (S830 and S835). For example, when the value of $n_{\mathrm{DMRS}}^{(2)}$ of the UE1 801 is 0, the value of $n_{\mathrm{DMRS}}^{OCC}$

is 0 according to Table 5, and as a result, the OCC of the UE1 801 has [+1, +1]. Further, when the value of $n_{\mathrm{DMRS}}^{(2)}$

of the UE2 802 is 3, the value of $n_{\mathrm{DMRS}}^{OCC}$ is 1 according to Table 5, and as a result, the OCC of the UE1 801 has [+1, -1].

Accordingly, when the value of $n_{\mathrm{DMRS}}^{(2)}$ recognized by receiving the CS parameter value expressed by 3 bits by the UE1 801 and the UE2 802 is one among 0, 6, 4, and 10 corresponding to CS-OCC linkage group A of Table 5,

$n_{\mathrm{DMRS}}^{OCC}$ is automatically calculated as 0 according to Table 5 without separate information reception. On the contrary, when the value of $n_{\mathrm{DMRS}}^{(2)}$ recognized by receiving the CS parameter value expressed by 3 bits is one among 3, 9, 2, and 8 corresponding to CS-OCC linkage group B of Table 5, $n_{\mathrm{DMRS}}^{OCC}$ is automatically calculated as 1 without separate information reception. In this case, in Table 5, when $n_{\mathrm{DMRS}}^{OCC}$ is 0, the OCC means {+1, +1}, and when

$n_{\mathrm{DMRS}}^{OCC}$ is 1, the OCC means {+1, 11}, but a mathematical expression and a value of a parameter expressing the OCC index are not limited within a scope in which the meaning and the contents are not changed. That is, $n_{\mathrm{DMRS}}^{(2)}$

for each layer may be calculated by adding a specific number by using the CS parameter of the first received DCI format.

Further, $n_{\mathrm{DMRS}}^{(2)}$ or the CS parameter of the DCI format corresponding to the linkage group A/B may also be variously applied in the implementation process. This has been described in Tables 5, 6, 7, and 8.

In S830 and S835, the UE1 801 has the OCC value of [+1, +1] and the UE2 802 has the OCC value of [+1, -1]. It is a matter of course that in the previous step, the UE1 801 obtains 0 as the value of $n_{\mathrm{DMRS}}^{(2)}$ and the UE2 802 obtains 3 as the value of $n_{\mathrm{DMRS}}^{(2)}$.

When the CS values and the OCC values for the first layer are set, the UE1 801 and the UE2 802 identify if there is a layer to be additionally allocated, and when there is the layer to be additionally allocated, each of the UE1 801 and the UE2 802 calculates a CS value of the layer, i.e. a second layer to an N$^{th}$ layer, to be additionally allocated, based

on $n_{\mathrm{DMRS}}^{(2)}$ of the first layer (S840 and S845).

Here, a rule (CS allocation method and CS allocation rule) of calculating the CS value $\alpha$ of the corresponding

layer based on the CS parameter value $n_{\mathrm{DMRS}}^{(2)}$ of the first layer may be applied, and this rule sets the CS values allocated to the respective layers to have the largest distance therebetween so as to decrease interlayer interference. As an exemplary embodiment of the CS allocation rule in which the CS values allocated to the respective layers according to the number of respective layers have the largest distance therebetween, aforementioned Equation 3 may be referred to.

For reference, when the UE 801 obtains 0 as the value of $n_{\mathrm{DMRS}}^{(2)}$ and the UE 802 obtains 3 as the value

of $n_{\mathrm{DMRS}}^{(2)}$, the values of $n_{\mathrm{DMRS}}^{(2)}$ for the respective layers of the UE1 801 are i) {0, 6} for the first and second layers, respectively, in a case where the rank is 2, iii) {0, 4, 8} for the first, second, and third layers, respectively, in a case where the rank is 3, and iv) {0, 3, 6, 9} or {0, 6, 3, 9} for the first, second, third, and fourth layers, respectively, in a case where the rank is 4.

The values of $n_{\mathrm{DMRS}}^{(2)}$ for the respective layers of the UE2 802 are i) {3, 9} for the first and second layers, respectively, in a case where the rank is 2, iii) {3, 7, 11} for the first, second, and third layers, respectively, in a case where the rank is 3, and iv) {3, 6, 9, 0} or {3, 9, 6, 0} for the first, second, third, and fourth layers, respectively, in a case where the rank is 4. In addition to Equation 3, a method of setting the CS values so that the respective layers are maximally spaced apart from each other may be applied.

After the CS values for the respective layers are calculated, each of the UE1 801 and the UE2 802 calculates the OCC indexes of the second to N<sup>th</sup> layers based on $n_{\mathrm{DMRS}}^{(2)}$ or the OCC of the first layer (S850 and S855). As described above, the OCC of the first layer has been calculated based on $n_{\mathrm{DMRS}}^{(2)}$ by the method of Table 5. Further, the OCC may also be allocated so as to have orthogonality. The OCCs of the second layer, the third layer, ... may be allocated and calculated based on the OCC (that is, the value calculated based on $n_{\mathrm{DMRS}}^{(2)}$) of the first layer. To this end, considering the total number of layers, the OCC allocation rule makes the OCC values allocated to the respective layers have maximum orthogonality when the OCC values allocated to the respective layers are linked to the preset available CS values so as to maximally decrease interlayer interference. Aforementioned Equation 4 described with reference to FIG. 7 sets the value of $n_{\mathrm{DMRS}}^{OCC}$ so that the value of $n_{\mathrm{DMRS}}^{OCC}$ varies for the first, second, third, and fourth layers in order to maximally secure orthogonality like Equation 3.

In S830 and S835, the UE1 801 has 0 as the OCC index and obtains [+1, +1] as the OCC value. Further, the UE2 802 has 1 as the OCC index and obtains [+1, -1] as the OCC value. As a result, the OCC index values for the respective layers of the UE1 801 are i) {0, 1} for the first and second layers, respectively, in a case where the rank is 2, iii) {0, 1, 0} for the first, second, and third layers, respectively, in a case where the rank is 3, and iv) {0, 1, 0, 1} for the first, second, third, and fourth layers, respectively, in a case where the rank is 4. Otherwise, the OCC index values for the respective layers of the UE1 801 may be i) {0, 0} for the first and second layers, respectively, in a case where the rank is 2, iii) {0, 0, 1} for the first, second, and third layers, respectively, in a case where the rank is 3, and iv) {0, 0, 1, 1} for the first, second, third, and fourth layers, respectively, in a case where the rank is 4.

In the meantime, the OCC index values for the respective layers of the UE2 802 are i) {1, 0} for the first and second layers, respectively, in a case where the rank is 2, iii) {1, 0, 1} for the first, second, and third layers, respectively, in a case where the rank is 3, and iv) {1, 0, 1, 0} for the first, second, third, and fourth layers, respectively, in a case where the rank is 4. Otherwise, the OCC index values for the respective layers of the UE2 802 may be i) {1, 1} for the first and second layers, respectively, in a case where the rank is 2, iii) {1, 1, 0} for the first, second, and third layers, respectively, in a case where the rank is 3, and iv) {1, 1, 0, 0} for the first, second, third, and fourth layers, respectively, in a case where the rank is 4.

Accordingly, an example of the configuration and the allocation of the CS values and the OCC values of the layers of the UE1 801 and the UE2 802 according to the rank in a state where 0 is allocated to the UE1 801 as the value of $n_{\mathrm{DMRS}}^{(2)}$ and 3 is allocated to the UE2 802 as the value of $n_{\mathrm{DMRS}}^{(2)}$ is represented in Table 6 below.

[Table 10]

| | | | First layer | Second layer | Third layer | Fourth layer |
|---|---|---|---|---|---|---|
| Rank 2 | UE1(801) | CS | 0 | 6 | | |
| | | OCC | 0={+1, +1} | 1={+1, -1} | | |
| | UE2(802) | CS | 3 | 9 | | |
| | | OCC | 1={+1, -1} | 0={+1, +1} | | |

(continued)

|  |  |  | First layer | Second layer | Third layer | Fourth layer |
|---|---|---|---|---|---|---|
| Rank 3 | UE1(801) | CS | 0 | 4 | 8 | |
| | | OCC | 0={+1, +1} | 1={+, -1} | 0={+1,+1} | |
| | UE2(802) | CS | 3 | 7 | 11 | |
| | | OCC | 1={+1, -1} | 0={+1, +1} | 1={+1, -1} | |
| Rank 4 | UE1(801) | CS | 0 | 3 | 6 | 9 |
| | | OCC | 0={+1, +1} | 1={+1, -1} | 0={+1, +1} | 1={+1, -1} |
| | UE2(802) | CS | 3 | 6 | 9 | 0 |
| | | OCC | 1={+1, -1} | 0={+1, +1} | 1={+1, -1} | 0={+1, +1} |

When the calculation of the CS and the OCC for the allocated layers is completed, each of the UE1 801 and the UE2 802 generates, for each layer, a DM-RS sequence of each layer by applying Equation 1 to the base sequence and the CS (cyclic shift) value $\alpha$ set for each layer, and a final UL DM-RS sequence by multiplying a sequence value (+1 or -1) of the OCC index set for each layer (S860 and S865). Then, the generated DM-RS sequence is mapped to a corresponding symbol of each slot through the resource element mapper (S870 and S875). The symbol mapped with the DM-RS linked to the PUSCH corresponds, as described above, to the fourth symbol among the seven symbols of each slot in a case of using the normal CP (cyclic prefix) and to the third symbol among the symbols of each slot in a case of using the extended CP. In a case of the DM-RS linked to the PUCCH, the corresponding symbol may include a maximum of three symbols in each slot, and the number and the positions of the corresponding symbols are different depending on the aforementioned type of CPs and format of the PUCCH as represented in Table 3. When the mapping is completed, an SC-FDMA symbol is generated from the Resource Element (RE) mapped with the DM-RS sequence through the SC FDMA generator (S880 and S885) and a DM-RS signal is transmitted to the BS (S890 and S895).

Table 11 represents examples of the allocation and the configuration of the CS and the OCC in each of the SU-MIMO environment and the MU-MIMO environment according to an exemplary embodiment of the present specification. For the convenience of description, in Table 11 of the CS and the OCC index of each layer, the value signaled by scheduling by the higher terminal is $n_{DMRS}^{(2)}$ that is the CS parameter value of the first layer. In Table 11-A, a UE A and a UE B in case 5 share the same bandwidth (equal bandwidth resource allocation), and a UE C has a different bandwidth from those of the UE A and the UE B (non-equal bandwidth resource allocation). In this case, the UE A and the UE B may receive a CS parameter value within one CS-OCC linkage group as the CS parameter value of the first layer, and are thus discriminated by the CS value of the same OCC index through the CS parameter value. The UE C may receive a CS parameter value within a CS-OCC linkage group different from that of the UE A and the UE B as the CS parameter value of the first layer, and thus the UE C is discriminated by the different OCC index different from the UE A and the UB.

That is, likewise to case 5 of Table 11-A, the number of UEs may be 2 or more in the MU-MIMO environment, but even in this case, in order to apply the OCC, there necessarily needs to be two UE groups with non-equal bandwidth resource allocation, and CS parameter values within the same CS-OCC linkage group are scheduled and transmitted to the UEs within the group as the CS parameter value of the first layer, but CS parameter values within the different CS OCC linkage groups need be essentially scheduled and transmitted to the UE groups having the non-equal bandwidth allocation as the CS parameter value of the first layer.

Table 11-B represents an example of the configuration in which, considering a non-equal sized resource allocation environment in the MU-MIMO, in order to discriminate the UEs by using a more flexible OCC, each of two UEs has only one OCC index, and the two UEs have different OCC indexes.

[Table 11] A. Example 1 of configuration of CS and OCC

| | | ULDM-RS | | First layer | | Second layer | Third layer | | Fourth layer |
|---|---|---|---|---|---|---|---|---|---|
| SU-MIMO | Case 1$_L$ -2 Rank, 1UE | UE A | $n_{\mathrm{DMRS}}^{(2)}$ | 0 | | 6 | | | |
| | | | $n_{\mathrm{DMRS}}^{OCC}$ | [+1, +1] | | [+1, -1] | | | |
| | Case 2 - 3 Rank, 1UE | UE A | $n_{\mathrm{DMRS}}^{(2)}$ | 0 | | 4 | 8 | | |
| | | | $n_{\mathrm{DMRS}}^{OCC}$ | [+1, +1] | | [+ 1, -1] | [+1, +1] | | |
| | Case 3 -4 Rank, 1UE | UE A | $n_{\mathrm{DMRS}}^{(2)}$ | 0 | | 3 | 6 | | 9 |
| | | | $n_{\mathrm{DMRS}}^{OCC}$ | [+1, +1] | | [+1, -1] | [+1, +1] | | [+1, -1] |
| MU-MIMO | case 4 -2 Rank per UE, 2UEs | UE A | $n_{\mathrm{DMRS}}^{(2)}$ | 0 | | 6 | | | |
| | | | $n_{\mathrm{DMRS}}^{OCC}$ | [+1, +1] | | [+1, -1] | | | |
| | | UE B | $n_{\mathrm{DMRS}}^{(2)}$ | 3 | | 9 | | | |
| | | | $n_{\mathrm{DMRS}}^{OCC}$ | [+1, -1] | | [+1, +1] | | | |
| | Case 5 -1/2/4 Rank per UE, 3UEs | UE A | $n_{\mathrm{DMRS}}^{(2)}$ | 0 | | | | | |
| | | | $n_{\mathrm{DMRS}}^{OCC}$ | [+1, +1] | | | | | |
| | | UE B | $n_{\mathrm{DMRS}}^{(2)}$ | 6 | | 9 | | | |
| | | | $n_{\mathrm{DMRS}}^{OCC}$ | [+1, +1] | | [+1,-1] | | | |
| | | UE C | $n_{\mathrm{DMRS}}^{(2)}$ | 2 | | 5 | 8 | | 11 |
| | | | $n_{\mathrm{DMRS}}^{OCC}$ | [+1, -1] | | [+1, +1] | [+1, -1] | | [+1, +1] |

B. Example 2 of configuration of CS and OCC

| UL DM-RS | | | First layer | Second layer | Third layer | Fourth layer |
|---|---|---|---|---|---|---|
| Case 1 (SU-MIMO) -Rank 2, 1UE | UE A | $n_{\mathrm{DMRS}}^{(2)}$ | 0 | 6 | | |
| | | $n_{\mathrm{DMRS}}^{OCC}$ | [+1, +1] | [+1, +1] | | |

(continued)

| UL DM-RS | | | First layer | Second layer | Third layer | Fourth layer |
|---|---|---|---|---|---|---|
| Case 2 (SU-MIMO) - Rank 3, 1UE | UE A | $n_{DMRS}^{(2)}$ | 0 | 4 | 8 | |
| | | $n_{DMRS}^{OCC}$ | [+1, +1] | [+1, +1] | [+1, -1] | |
| Case 3 (SU-MIMO) - Rank 4, 1UE | UE A | $n_{DMRS}^{(2)}$ | 0 | 6 | 3 | 9 |
| | | $n_{DMRS}^{OCC}$ | [+1, +1] | [+1, +1] | [+1, -1] | [+1, -1] |
| Case 4 (MU-MIMO) - Total Rank 4, 2UEs | UE A | $n_{DMRS}^{(2)}$ | 0 | 6 | | |
| | | $n_{DMRS}^{OCC}$ | [+1, +1] | [+1, +1] | | |
| | UE B | $n_{DMRS}^{(2)}$ | 3 | 9 | | |
| | | $n_{DMRS}^{OCC}$ | [+1, -1] | [+1, -1] | | |

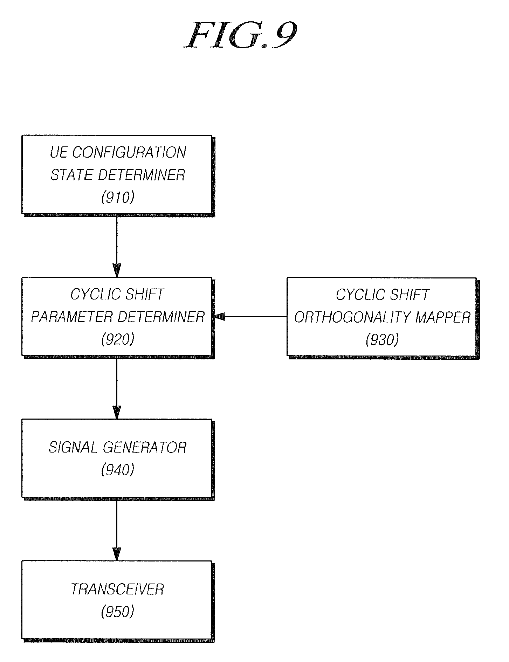

FIG. 9 is a diagram illustrating a configuration of an apparatus for transmitting a cyclic shift parameter providing orthogonality according to an exemplary embodiment of the present specification.

The configuration of FIG. 9 may be a BS.

The entire configuration includes a UE configuration state determiner 910, a cyclic shift parameter determiner 920, a signal generator 940, and a transceiver 950, and may further include a cyclic shift-orthogonality mapper 930.

The UE configuration state determiner 910 determines a multiple access state of one or more UEs, i.e. user equipments. The UE configuration state determiner 910 determines whether the UE is operated in the SU-MIMO or the MU-MIMO, and the like.

The cyclic shift parameter determiner 920 determines a cyclic shift parameter for calculating information related to orthogonality according to the determined multiple access state of the UE.

For example, when the UE configuration state determiner 910 determines that the multiple access state of the UE is the SU-MIMO, the cyclic shift parameter determiner 920 may select one among all available cyclic shift parameters allocatable to the UE. This includes the aforementioned example described with reference to FIG. 7.

In the meantime, when the UE configuration state determiner 910 determines that the multiple access state is the MU-MIMO and includes a first UE and a second UE, the UE configuration state determiner 910 may calculate indicators related to different, i.e., specific orthogonality by selecting cyclic shift parameters included in different groups or sets in allocating the cyclic shift parameter as illustrated in FIG. 8.

More specifically, a first cyclic shift parameter to be received by the first UE and a second cyclic shift parameter to be received by the second UE are determined, and first information related to the orthogonality calculated based on the first cyclic shift parameter may be different from second information related to the orthogonality calculated based on the second cyclic shift parameter.

In FIG. 9, $n_{DMRS}^{(2)}$ may be an exemplary embodiment of the cyclic shift parameter, and indication information related to orthogonality includes an OCC index. Accordingly, the CS-OCC linkage group like Table 5 may be referred to. The information may be stored in the cyclic shift-orthogonality mapper 930. More specifically, the cyclic shift-orthogonality mapper 930 stores a first set and a second set including all available cyclic shift parameter allocatable to the UE, and may store a fact that an intersection of the first set and the second set is a null set, the first cyclic shift parameter is an element of the first set, and the second cyclic shift parameter is an element of the second set.

In the meantime, the cyclic shift parameter determiner 920 may determine the cyclic shift parameters to have different OCC indexes when the band allocated to the first UE is different from the band allocated to the second UE.

Then, the signal generator 940 generates a signal for transmitting the control information including the determined cyclic shift parameter to the UE. In this case, the DCI format 0 included in the PDCCH may be an exemplary embodiment of the control information. Further, the generated signal is transmitted to the UT through the transceiver 950.

The apparatus of FIG. 9 transmits the aforementioned information for indicating $n_{\mathrm{DMRS}}^{(2)}$ by inserting the information in the DCI format 0, and in this process, each UE may have the OCC index having orthogonality through $n_{\mathrm{DMRS}}^{(2)}$. Accordingly, the values settable as $n_{\mathrm{DMRS}}^{(2)}$ are divided into two groups so as to prevent the values from overlapping, so that the OCC index of $n_{\mathrm{DMRS}}^{(2)}$ of a specific group is calculated as 0 and the OCC index of $n_{\mathrm{DMRS}}^{(2)}$ of another group is calculated as 1. As a result, even without separate transmission of the OCC index, the UE may calculate the OCC index through the received $n_{\mathrm{DMRS}}^{(2)}$ and may calculate the CD and the OCC for each layer and generate a reference signal, such as the DM-RS.

Further, the cyclic shift parameter may be transmitted through signaling of a physical layer L1, such as the PDCCH, signaling of a wireless access control layer (MAC) L2, RRC (Radio Resource Control) signaling, or LC signaling, such as a message, but is not limited thereto, and the OCC index may also be set as three or more types of values, other than 0 and 1.

By using the aforementioned exemplary embodiments of the present invention, in the transmission of the reference signal, such as the uplink DM-RS, considering increasing antennas in the LTE-A and each UE (terminal) or each BS (cell) in an environment, such as new MU (Multi-User) MIMO and CoMP, in order to increase the number of orthogonal resources to be multiplexed with orthogonal discrimination, orthogonality may be satisfied by directly transmitting the value of the parameter setting the CS value α of the DM-RS without separately transmitting information related to orthogonality, so that there is an effect in that the basic cyclic shift parameter in the existing LTE may be used for compatibility while maintaining backward compatibility with the existing LTE.

Further, there is an effect in that orthogonality between reference signal sequences may be secured and interference may be reduced by maximizing a phase difference between the CSs.

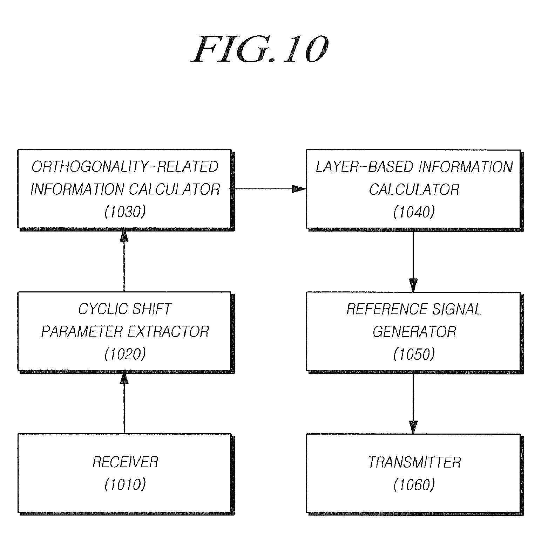

FIG. 10 is a diagram illustrating a configuration of an apparatus for transmitting a reference signal satisfying orthogonality by receiving a cyclic shift parameter providing orthogonality according to an exemplary embodiment of the present specification. The exemplary embodiment of FIG. 10 may be applied to a UE.

An entire configuration includes a receiver 1010, a cyclic shift parameter extractor 1020, an orthogonality-related information calculator 1030, a layer-based information calculator 1040, a reference signal generator 1050, and a transmitter 1060. Each element will be described below in more detail.

The receiver 1010 receives control information from the BS. This includes reception of a wireless signal including the control information. The control information may be transmitted while being loaded into the PDCCH.

The cyclic shift parameter extractor 1020 extracts a cyclic shift parameter for a first layer from the control signal received by the receiver 1010. When the control information is transmitted while being loaded into the PDCCH, the cyclic shift parameter indicating the $n_{\mathrm{DMRS}}^{(2)}$ may be included in the DCI format 0.

The orthogonality-related information calculator 1030 calculates information related to orthogonality for the first layer based on the received cyclic shift parameter for the first layer. The received cyclic shift parameter for the first layer may be calculated by a predetermined function or a mapping relation. An example of the information related to the orthogonality for the first layer may be the OCC index that is information indicating an orthogonality cover code.

For example, when the received cyclic shift parameter for the first layer belongs to a specific cyclic shift parameter group, like a CS-OCC coverage group, the information related to orthogonality may be calculated based on the OCC index related to the specific cyclic shift parameter group. Accordingly, when one OCC is mapped with one cyclic shift parameter group including a plurality of cyclic parameters, the one OCC may be calculated based on all cyclic shift parameters included in a corresponding group. This has been previously described in the CS-OCC linkage group.

The layer-based information calculator 1040 calculates a cyclic shift parameter for a Kth layer from the cyclic shift parameter for the first layer, and information related to orthogonality for the Kth layer from the information related to the orthogonality for the first layer. Here, when it is assumed that the total number of layers allocated for each UE is N, K means the Kth layer among the total N layers, in which N is a natural number equal to or larger than 1.

That is, the cyclic shift parameters for a second layer, a third layer, ..., and the like may be calculated so as to maximally decrease interference according to the number of layers used by a corresponding UE. Further, the information related to orthogonality may also be calculated for each layer based on the first layer. A process of calculating the cyclic shift parameters based on the OCC of the first layer (or the cyclic shift parameter of the first layer) and the process of calculating the cyclic shift parameter for each layer are the same as those described with reference to Equations 3 and 4, Tables 10 and 11, and FIGs. 7 and 8.

After the information necessary for the generation of a reference signal is calculated, the reference signal generator 1050 generates the reference signal. An exemplary embodiment of the reference signal is the DM-RS. More specifically, the reference signal generator 1050 generates a reference signal for the first layer by using the cyclic shift parameter for the first layer and the information related to the orthogonality for the first layer, and generates a reference signal for the second layer by using the cyclic shift parameter for the $K^{th}$ layer and the information related to the orthogonality for the $K^{th}$ layer. Here, when it is assumed that the total number of layers allocated for each UE is N, K means the $K^{th}$ layer among the total N layers, in which N is a natural number equal to or larger than 1.

As an exemplary embodiment of the generation of the reference signal, the reference signal may be calculated by Equations 1 and 2 through the cyclic shift (CS) for each layer and the aforementioned base sequence and the OCC.

According to the exemplary embodiment, the reference signal generator 1050 calculates the cyclic shift (CS) value $\alpha$ by applying $n_{\mathrm{DMRS}}^{(2)}$ that is the previously received cyclic shift parameter for each layer, $n_{\mathrm{DMRS}}^{(1)}$, and $^{n}\mathrm{PRS}$ $(^{n}s)$ to Equation 2, generates a DM-RS sequence for each layer through Equation 1 by calculating the base sequence $\bar{r}_{u,v}(n)$, and then generating a reference signal sequence by multiplying a sequence value (+1 or -1) of the OCC index set for each layer to generate a final UL DM-RS sequence. Then, the generated DM-RS sequence is mapped to a corresponding symbol of each slot through the resource element mapper, and when the mapping is completed, an SC-FDMA symbol is generated from the Resource Element (RE) mapped with the DM-RS sequence through the SC FDMA generator.

Accordingly, the reference signal generator 1050 may be implemented as an independent element, but may be implemented together with a scrambler, a modulation mapper, a transform precoder, a resource element mapper, and the SC (Single-Carrier)-FDMA signal generator, which are the elements of the existing UE, depending on a case.

The generated reference signal is transmitted to the BS through the transmitter 1060.

Through the configuration of FIG. 10, in a case of the SU-MIMO, the UE may generate a UL DM-RS through the cyclic shift parameter and the OCC value so as to maximally decrease interlayer interference and transmit the generated UL DM-RS. Further, even in a case of the MU-MIMO, the UEs may generate UL DM-RSs through the cyclic shift parameters and the OCC values so as to maximally decrease interference between the UEs. The cyclic shift parameters also provide the UEs with information on the OCC maintaining mutual orthogonality, so that orthogonality between the UEs may also be secured through the OCC. Further, signaling separate from the LTE system is not performed on the UEs, so that compatibility is also satisfied.

The aforementioned reference signal generator 1050 may be implemented inside or in connection with the SC-FDMA signal generator.

Further, while it is not illustrated, the apparatus for employing the exemplary embodiment of FIGs. 7 and 8 may further include an antenna (or layer) number identifier for recognizing the number of antennas (or layers) in addition to the elements of FIG. 10, and in this case, the reference signal generator 1050 may generate the DM-RS sequence for each layer.

The BS and the UE of FIGs. 9 and 10 transmits and receives one cyclic shift parameter of the DCI format, and $n_{\mathrm{DMRS}}^{(2)}$ for each layer is calculated by using the value of the one cyclic shift parameter, and as an exemplary embodiment for this, $n_{\mathrm{DMRS}}^{(2)}$ may be calculated by adding a specific number to $n_{\mathrm{DMRS}}^{(2)}$ calculated based on the received cyclic shift parameter of the DCI format. Further, a corresponding OCC index may be calculated according to $n_{\mathrm{DMRS}}^{(2)}$ corresponding to the linkage group A/B. This has been previously described with reference to Tables 5, 6, 7, and 8. $n_{\mathrm{DMRS}}^{(2)}$ and the OCC index for each layer may be calculated by applying previously described Equations 3 and 4.

The present specification provides the method and the apparatus for allocating a cyclic shift (CS) value and an OCC (Orthogonal Cover Code) for each layer of Uplink (UL) Demodulation Reference Signal (DM-RS), in which when a cyclic shift (CS) value of the first layer determined by scheduling by a higher terminal is provided (signaled) to the UE through the BS (eNB and the like), cyclic shift (CS) values of another layer and an OCC of each layer are allocated based on the signaled cyclic shift value. Through this, the transmission of the UL DM-RS for a plurality of layers in the LTE-A system and the like may be achieved with the same signaling method and the same DCI format configuration for a UL DM-RS as those of the existing LTE without additional signaling.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

## CROSS-REFERENCE TO RELATED APPLICATION

This application claims priority under 35 U.S.C. §119(a) to a Korean Patent Application entitled filed in the Korean Industrial Property Office on April 5, 2010 and April 6, 2010 and assigned Serial Nos. 10-2010-0031149 and 10-2010-0031375, the contents of which are incorporated herein by reference. Further, when this application claims the priority in other countries, other than the USA with the same reason, the contents of which are incorporated herein by reference.

**Claims**

1.    A method of transmitting a cyclic shift parameter indicating orthogonality by a base station, the method comprising:

   determining a multiple access state of one or more user equipments and determining a cyclic shift parameter so that the user equipment calculates information related to orthogonality; and
   transmitting the determined cyclic shift parameter to the user equipment,
   wherein the cyclic shift parameter is determined so that information related to orthogonality for each of all layers is calculated based on transmitted one cyclic shift parameter.

2.    The method of claim 1, wherein when the multiple access state of the user equipment is SU-MIMO, determining of the cyclic shift parameter comprises selecting the cyclic shift parameter among all available cyclic shift parameters allocatable to the user equipment.

3.    The method of claim 1, wherein when the multiple access state of the user equipment is MU-MIMO and includes a first user equipment and a second user equipment, determining of the cyclic shift parameter comprises:

   determining a first cyclic shift parameter which the first user equipment is to receive; and
   determining a second cyclic shift parameter which the second user equipment is to receive,
   wherein first information related to the orthogonality calculated based on the first cyclic shift parameter is different from second information related to the orthogonality calculated based on the second cyclic shift parameter.

4.    The method of claim 3, wherein the cyclic shift parameters allocatable to the user equipments are divided into two sets including a first set and a second set,
   the first set and the second set have a relation of a relative prime, the first cyclic shift parameter is an element of the first set, and
   the second cyclic shift parameter is an element of the second set.

5.    The method of claim 3, wherein a band allocated to the first user equipment is not equal to a band allocated to the second user equipment.

6.    The method of one of claims 1 to 5, wherein the information related to the orthogonality is information indicating an orthogonality cover code.

7.    The method of claim 6, wherein the orthogonality cover code for each of two or more layers of the user equipment is allocated by using an allocation rule of the orthogonality cover code calculated based on the cyclic shift parameter.

8.    A method of transmitting a reference signal by receiving a cyclic shift parameter indicating orthogonality by a user equipment, the method comprising:

calculating information related to orthogonality for a first layer from a cyclic shift parameter received from a base station by the user equipment using two or more layers;

calculating information related to orthogonality for each of remaining layers by using the information related to the orthogonality for the first layer;

generating a reference signal for each of the layers by using the information on the orthogonality for each layer; and

transmitting the generated reference signal to the base station.

9. The method of claim 8, further comprising calculating a cyclic shift parameter for each of the remaining layers by using a cyclic shift parameter for the first layer, in which the cyclic shift parameter received by the user equipment from the base station is a parameter indicating the cyclic shift parameter for the first layer, and

generating of the reference signal comprises generating the reference signal by using the cyclic shift parameter for each of the layers and the information related to the orthogonality together.

10. The method of claim 8, wherein the received cyclic shift parameter belongs to one group among two or more cyclic shift parameter groups,

the cyclic shift parameter group is linked with group-specific orthogonality-related information, and

the information related to the orthogonality is calculated based on information related to orthogonality linked with the cyclic shift parameter group to which the cyclic shift parameter belongs.

11. The method of one of claims 8 to 10, wherein the information related to the orthogonality is information indicating an orthogonality cover code.

12. The method of claim 11, wherein calculating of the information related to the orthogonality further comprises allocating an orthogonality cover code for each of two or more layers of the user equipment by using an allocation rule of the orthogonality cover code calculated based on the cyclic shift parameter.

13. An apparatus for transmitting a cyclic shift parameter indicating orthogonality, the apparatus comprising:

a UE configuration state determiner for determining a multiple access state of one or more user equipments;

a cyclic shift parameter determiner for determining a cyclic shift parameter according to the determined multiple access state of the user equipment so as to calculate information related to orthogonality;

a signal generator for generating a signal for transmitting control information including the determined cyclic shift parameter to the user equipment; and

a transceiver for transmitting the signal to the user equipment,

wherein the cyclic shift parameter is determined so that information related to orthogonality for each of all layers is calculated based on transmitted one cyclic shift parameter.

14. The apparatus of claim 13, wherein when the multiple access state of the user equipment determined by the UE configuration state determiner is SU-MIMO, the cyclic shift parameter determiner determines the cyclic shift parameter by selecting the cyclic shift parameter among all available cyclic shift parameters allocatable to the user equipment.

15. The apparatus of claim 13, wherein when the multiple access state of the user equipment determined by the UE configuration state determiner is MU-MIMO and includes a first user equipment and a second user equipment, the cyclic shift parameter determiner determines a first cyclic shift parameter which the first user equipment is to receive and a second cyclic shift parameter which the second user equipment is to receive,

first information related to the orthogonality calculated based on the first cyclic shift parameter is different from second information related to the orthogonality calculated based on the second cyclic shift parameter.

16. The apparatus of claim 15, wherein all available cyclic shift parameters allocatable to the user equipments are divided into two sets including a first set and a second set, and the first set and the second set have a relation of a relative prime, and

the cyclic shift parameter determiner determines the first cyclic shift parameter by selecting the cyclic shift parameter from elements of the first set and determines the second cyclic shift parameter by selecting the cyclic shift parameter from elements of the second set.

17. The apparatus of claim 13, wherein a band allocated to the first user equipment is not equal to a band allocated to the second user equipment.

18. The apparatus of one of claims 13 to 17, wherein the information related to the orthogonality is information indicating an orthogonality cover code.

19. The apparatus of claim 18, wherein the orthogonality cover code is allocated to each of two or more layers of the user equipment by using an allocation rule of the orthogonality cover code calculated based on the cyclic shift parameter.

20. A user equipment for transmitting a reference signal by receiving a cyclic shift parameter indicating orthogonality, the user equipment comprising:

a receiver for receiving control information from a base station by a user equipment using two or more layers;
a cyclic shift parameter extractor for extracting a cyclic shift parameter from a control signal received by the receiver;
an orthogonality related information calculator for calculating information related to orthogonality for a first layer based on the received cyclic shift parameter;
a layer-based information calculator for calculating information related to orthogonality for each of remaining layers by using the information related to the orthogonality for the first layer;
a reference signal generator for generating a reference signal for each of the remaining layers by using the information on the orthogonality for each of the layers; and
a transmitter for transmitting the generated reference signal to the base station.

21. The user equipment of claim 20, wherein the cyclic shift parameter received from the base station by the user equipment is a parameter indicating a cyclic shift parameter for the first layer,
the layer-based information calculator calculates a cyclic shift parameter for each of the remaining layers by using the cyclic shift parameter for the first layer, and
the reference signal generator generates the reference signal by using the cyclic shift parameter for each of the layers and the information related to the orthogonality together.

22. The user equipment of claim 20, wherein the received cyclic shift parameter belongs to one group among two or more cyclic shift parameter groups, and
the cyclic shift parameter group is linked with group-specific orthogonality-related information, and information related to orthogonality is calculated based on information related to orthogonality linked with the cyclic shift parameter group to which the cyclic shift parameter belongs.

23. The user equipment of one of claims 20 to 22, wherein the information related to the orthogonality is information indicating an orthogonality cover code.

24. The user equipment of claim 23, wherein the orthogonality related information calculator allocates an orthogonality cover code for each of two or more layers of the user equipment by using an allocation rule of the orthogonality cover code calculated based on the cyclic shift parameter.

# FIG.1

BASE STATION (BS)

USER EQUIPMENT (UE)

## FIG.2

SUBFRAME = TTI = 1.0 ms

210

202          203

TIME SLOT = 0.5 ms

202

212  211

| CP | LB#1 | CP | LB#2 | CP | LB#3 | CP | LB#4 | CP | LB#5 | CP | LB#6 | CP | LB#7 |

*FIG.3*

START

TRANSMIT CS PARAMETER VALUE $n_{DMRS}^{(2)}$
OF 3 BITS DETERMINED FOR EACH UE
BY HIGHER TERMINAL OF SYSTEM BY eNB
(S330)

GENERATE BASE SEQUENCE ($\overline{r}_{u,v}$ (n)) (S310)

CALCULATE $n_{DMRS}^{(1)}$ AND $n_{PRS}(n_s)$ (S320)

CALCULATE $n_{DMRS}^{(2)}$ (S340)

CALCULATE $n_{cs}$ AND $\alpha$ ( S350)

GENERATE DM-RS SEQUENCE BASED
ON BASE SEQUENCE AND CS (S360)

MAP DM-RS SEQUENCE TO CORRESPONDING SYMBOL
FOR DM-RS OF EACH SLOT THROUGH RE MAPPER
(S370)

GENERATE SC-FDMA SYMBOL FROM RE MAPPED
WITH DM-RS SEQUENCE THROUGH SC FDMA
GENERATOR AND TRANSMIT DM-RS SIGNAL TO BS
(S380)

END

$$\text{START}$$

GENERATE BASE SEQUENCE ($\bar{r}_{u,v}(n)$) (S410)

CALCULATE $n_{DMRS}^{(1)}$ AND $n_{PRS}(n_s)$ (S420)

TRANSMIT CS PARAMETER VALUE $n_{DMRS}^{(2)}$ OF 3 BITS AND OCC INDEX $n_{DMRS}^{OCC}$ OF 1 BIT DETERMINED FOR EACH UE BY HIGHER TERMINAL OF SYSTEM BY eNB (S425)

CALCULATE $n_{DMRS}^{(2)}$ AND $n_{DMRS}^{OCC}$ (S430)

CALCULATE CS VALUE OF FIRST LAYER BY CALCULATING $n_{cs}$ AND $\alpha$ BASED ON $n_{DMRS}^{(2)}$ (S440)

CALCULATE OCC VALUE OF FIRST LAYER BASED ON $n_{DMRS}^{OCC}$ (S450)

THERE IS LAYER TO BE ADDITIONALLY ALLOCATED? (S460) — NO

YES

CALCULATE CS AND OCC VALUES OF CORRESPONDING LAYER BASED ON $n_{DMRS}^{(2)}$ AND $n_{DMRS}^{OCC}$ OF FIRST LAYER (S465)

GENERATE DM-RS SEQUENCE OF EACH LAYER BASED ON BASE SEQUENCE, CS VALUE, AND OCC OF EACH LAYER (S470)

MAP DM-RS SEQUENCE TO CORRESPONDING SYMBOL FOR DM-RS OF EACH SLOT THROUGH RE MAPPER (S480)

GENERATE SC-FDMA SYMBOL FROM RE MAPPED WITH DM-RS SEQUENCE THROUGH SC FDMA GENERATOR AND TRANSMIT DM-RS SIGNAL TO BS (S490)

$$\text{END}$$

*FIG.4*

*FIG.5*

```
                          ( START )
                              │
                              ▼
        ┌─────────────────────────────────────────────────┐
        │  IDENTIFY NUMBER OF UES AND NUMBER OF ANTENNAS    │
        │  FOR UE (S510)                                    │
        └─────────────────────────────────────────────────┘
                              │
                              ▼
                          ◇─────────◇
   IN CASE OF SU-MIMO    │ STATE OF UE? │   IN CASE OF MU-MIMO
   ┌──────────────◄──────│   (S520)    │──────►──────────────┐
   │                      ◇─────────◇                        │
   ▼                                                         ▼
┌──────────────────────────┐            ┌──────────────────────────────┐
│ DETERMINE SHIFT PARAMETER│            │ DETERMINE CYCLIC SHIFT       │
│ TO BE ALLOCATED TO UE    │            │ PARAMETER FOR EACH UE        │
│ AMONG ALL ALLOCATABLE    │            │ BETWEEN FIRST CYCLIC SHIFT   │
│ CYCLIC SHIFT PARAMETERS  │            │ PARAMETER GROUP AND SECOND   │
│ (S530)                   │            │ CYCLIC SHIFT PARAMETER       │
│                          │            │ GROUP (S540)                 │
└──────────────────────────┘            └──────────────────────────────┘
```

IDENTIFY NUMBER OF UES AND NUMBER OF ANTENNAS FOR UE (S510)

STATE OF UE? (S520)

IN CASE OF SU-MIMO

IN CASE OF MU-MIMO

DETERMINE SHIFT PARAMETER TO BE ALLOCATED TO UE AMONG ALL ALLOCATABLE CYCLIC SHIFT PARAMETERS (S530)

DETERMINE CYCLIC SHIFT PARAMETER FOR EACH UE BETWEEN FIRST CYCLIC SHIFT PARAMETER GROUP AND SECOND CYCLIC SHIFT PARAMETER GROUP (S540)

INSERT SELECTED CYCLIC SHIFT IN CONTROL INFORMATION (S550)

TRANSMIT CONTROL INFORMATION TO UE (S560)

END

*FIG.6*

START

RECEIVE CONTROL INFORMATION FROM BS
(S610)

CALCULATE CYCLIC SHIFT PARAMETER
FOR FIRST LAYER BASED ON RECEIVED
CONTROL INFORMATION (S620)

CALCULATE INFORMATION RELATED TO
ORTHOGONALITY FOR FIRST LAYER BASED ON CYCLIC
SHIFT PARAMETER FOR FIRST LAYER (S630)

THERE IS LAYER
TO BE ADDITIONALLY ALLOCATED?
(S640)

YES

NO

CALCULATE CYCLIC SHIFT PARAMETER
FOR Nth LAYER BASED ON
CYCLIC SHIFT PARAMETER
FOR FIRST LAYER (S650)

CALCULATE INFORMATION RELATED TO
ORTHOGONALITY FOR Nth LAYER
BASED ON INFORMATION RELATED TO
ORTHOGONALITY FOR FIRST LAYER (S660)

GENERATE REFERENCE SIGNAL FOR EACH
OF FIRST TO Nth LAYERS (S670)

TRANSMIT GENERATED REFERENCE SIGNAL TO BS
(S680)

END

CALCULATE BASE SEQUENCE ($\overline{r}_{u,v}(n)$)
, $n_{DMRS}^{(1)}$ AND $n_{PRS}(n_s)$ (S710)

TRANSMIT CONTROL
INFORMATION (S720)

GENERATE CONTROL INFORMATION INCLUDING
CS PARAMETER VALUE $n_{DMRS}^{(2)}$ OF 3 BITS DETERMINED
BY HIGHER TERMINAL OF SYSTEM (S715)

CALCULATE $n_{DMRS}^{(2)}$ BASED ON CONTROL INFORMATION (S725)

CALCULATE CS AND OCC OF FIRST LAYER BASED ON
$n_{DMRS}^{(2)}$ (S730)

CALCULATE CS FOR SECOND TO Nth LAYERS BASED ON
$n_{DMRS}^{(2)}$ (S735)

CALCULATE OCC VALUES OF SECOND TO Nth LAYERS BY
USING $n_{DMRS}^{(2)}$ OR OCC VALUE OF FIRST LAYER (S740)

GENERATE DM-RS SEQUENCE OF EACH LAYER BASED ON
BASE SEQUENCE, CS VALUE, AND OCC OF EACH LAYER (S745)

MAP DM-RS SEQUENCE TO CORRESPONDING SYMBOL FOR
DM-RS OF EACH SLOT THROUGH RE MAPPER (S750)

GENERATE SC-FDMA SYMBOL FROM RE MAPPED WITH
DM-RS SEQUENCE THROUGH SC FDMA GENERATOR (S755)

TRANSMIT SC-FDMA
SYMBOL (S760)

*FIG. 7*

EP 2 557 709 A2

FIG.8

UE 1 (801)      eNB (809)      UE 2 (802)

GENERATE CONTROL INFORMATION INCLUDING CS PARAMETER VALUE OF 3 BITS CORRESPONDING TO $n_{DMRS}^{(2)}$ RELATED TO FIRST OCC VALUE DETERMINED FOR UE 1, AND CONTROL INFORMATION INCLUDING CS PARAMETER VALUE OF 3 BITS CORRESPONDING TO $n_{DMRS}^{(2)}$ RELATED TO SECOND OCC VALUE DETERMINED FOR UE 2 BY HIGHER TERMINAL OF SYSTEM ACCORDING TO CS-OCC LINK (S816)

CALCULATE BASE SEQUENCE $(\bar{r}_{u,v}(n))$, $n_{DMRS}^{(1)}$ and $n_{PRS}(n_s)$ (S810)

CALCULATE BASE SEQUENCE $(\bar{r}_{u,v}(n))$, $n_{DMRS}^{(1)}$ and $n_{PRS}(n_s)$ (S815)

TRANSMIT CONTROL INFORMATION (S818)      TRANSMIT CONTROL INFORMATION (S819)

CALCULATE $n_{DMRS}^{(2)}$ BASED ON CONTROL INFORMATION(S820)

CALCULATE $n_{DMRS}^{(2)}$ BASED ON CONTROL INFORMATION(S825)

CALCULATE CS AND OCC OF FIRST LAYER BASED ON $n_{DMRS}^{(2)}$ (S830)

CALCULATE CS AND OCC OF FIRST LAYER BASED ON $n_{DMRS}^{(2)}$ (S835)

CALCULATE CS OF SECOND TO Nth LAYERS BASED ON $n_{DMRS}^{(2)}$ (S840)

CALCULATE CS OF SECOND TO Nth LAYERS BASED ON $n_{DMRS}^{(2)}$ (S845)

CALCULATE OCC OF SECOND TO Nth LAYERS BASED ON $n_{DMRS}^{(2)}$ OR OCC VALUE (FIRST OCC) OF FIRST LAYER (S850)

CALCULATE OCC OF SECOND TO Nth LAYERS BASED ON $n_{DMRS}^{(2)}$ OR OCC VALUE (FIRST OCC) OF SECOND LAYER (S855)

GENERATE DM-RS SEQUENCE OF EACH LAYER BASED ON BASE SEQUENCE, CS VALUE, AND OCC OF EACH LAYER (S860)

GENERATE DM-RS SEQUENCE OF EACH LAYER BASED ON BASE SEQUENCE, CS VALUE, AND OCC OF EACH LAYER (S865)

MAP DM-RS SEQUENCE TO CORRESPONDING SYMBOL FOR DM-RS OF EACH SLOT THROUGH RE MAPPER (S870)

MAP DM-RS SEQUENCE TO CORRESPONDING SYMBOL FOR DM-RS OF EACH SLOT THROUGH RE MAPPER (S875)

GENERATE SC-FDMA SYMBOL FROM RE MAPPED WITH DM-RS SEQUENCE THROUGH SC FDMA GENERATOR (S880)

GENERATE SC-FDMA SYMBOL FROM RE MAPPED WITH DM-RS SEQUENCE THROUGH SC FDMA GENERATOR (S885)

TRANSMIT SC-FDMA SYMBOL (S890)      TRANSMIT SC-FDMA SYMBOL (S895)

EP 2 557 709 A2

# FIG.9

```
┌─────────────────────────┐
│   UE CONFIGURATION      │
│   STATE DETERMINER      │
│        (910)            │
└─────────────────────────┘
            │
            ▼
┌─────────────────────────┐          ┌─────────────────────────┐
│    CYCLIC SHIFT         │          │    CYCLIC SHIFT         │
│ PARAMETER DETERMINER    │◄─────────│ ORTHOGONALITY MAPPER    │
│        (920)            │          │        (930)            │
└─────────────────────────┘          └─────────────────────────┘
            │
            ▼
┌─────────────────────────┐
│   SIGNAL GENERATOR      │
│        (940)            │
└─────────────────────────┘
            │
            ▼
┌─────────────────────────┐
│     TRANSCEIVER         │
│        (950)            │
└─────────────────────────┘
```

# FIG.10

```
┌─────────────────────────────┐          ┌─────────────────────────────┐
│  ORTHOGONALITY-RELATED      │          │  LAYER-BASED INFORMATION    │
│  INFORMATION CALCULATOR     │─────────▶│  CALCULATOR                 │
│  (1030)                     │          │  (1040)                     │
└─────────────────────────────┘          └─────────────────────────────┘
              ▲                                         │
              │                                         ▼
┌─────────────────────────────┐          ┌─────────────────────────────┐
│  CYCLIC SHIFT               │          │  REFERENCE SIGNAL           │
│  PARAMETER EXTRACTOR        │          │  GENERATOR                  │
│  (1020)                     │          │  (1050)                     │
└─────────────────────────────┘          └─────────────────────────────┘
              ▲                                         │
              │                                         ▼
┌─────────────────────────────┐          ┌─────────────────────────────┐
│  RECEIVER                   │          │  TRANSMITTER                │
│  (1010)                     │          │  (1060)                     │
└─────────────────────────────┘          └─────────────────────────────┘
```

**EP 2 557 709 A2**

### Patent documents cited in the description

- KR 1020100031149
- KR 1020100031375